(19) Europäisches Patentamt
European Patent Office
Office européen des brevets

(11) EP 4 197 624 A1

(12) **EUROPEAN PATENT APPLICATION**
published in accordance with Art. 153(4) EPC

(43) Date of publication:
**21.06.2023 Bulletin 2023/25**

(21) Application number: **21920256.1**

(22) Date of filing: **21.01.2021**

(51) International Patent Classification (IPC):
***B01D 61/44** (2006.01)* ***B01D 67/00** (2006.01)*
***B01D 69/12** (2006.01)* ***B01D 69/02** (2006.01)*
***B01D 71/26** (2006.01)* ***B01D 71/28** (2006.01)*

(52) Cooperative Patent Classification (CPC):
**B01D 61/44; B01D 67/00; B01D 69/02; B01D 69/12; B01D 71/26; B01D 71/28**

(86) International application number:
**PCT/CN2021/073135**

(87) International publication number:
**WO 2022/155854 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Quzhou Lanran New Material Co., Ltd.**
**Quzhou, Zhejiang 324000 (CN)**

(72) Inventors:
- **LEI, Yinlin**
  **Quzhou, Zhejiang 324000 (CN)**
- **LOU, Yongtong**
  **Quzhou, Zhejiang 324000 (CN)**
- **QING, Bo**
  **Quzhou, Zhejiang 324000 (CN)**
- **CHEN, Wenlan**
  **Quzhou, Zhejiang 324000 (CN)**
- **YIN, Jin**
  **Quzhou, Zhejiang 324000 (CN)**

(74) Representative: **Hofmann, Matthias**
**Boehmert & Boehmert**
**Anwaltspartnerschaft mbB**
**Pettenkoferstraße 22**
**80336 München (DE)**

(54) **SINGLE PIECE-TYPE BIPOLAR FILM ROLL WITH MESH CLOTH SUPPORT AND MANUFACTURING METHOD THEREFOR**

(57) A single piece-type bipolar film roll with a mesh cloth support and a manufacturing method therefor. The single piece-type bipolar film roll is supported by a high-strength ultra-high molecular weight polyethylene mesh cloth, one side of the single piece-type bipolar film roll is a cation exchange layer containing a benzenesulfonic acid group, the other side of the single piece-type bipolar roll is an anion exchange layer containing a benzyl dimethyl butyl ammonium quaternary amino group, and the middle is a water dissociation catalyst layer containing a benzyl methyl butyl amine tertiary amino group, and the three layers form the single piece-type bipolar film roll. By providing a wider protective film and a narrower spacing film, a dipping and absorbing film roll is polymerized to prepare a composite base film roll which is then subjected to continuous sulfonation to prepare a single-sided sulfonated composite positive film roll, and then the unreacted blank side is sequentially subjected to three-step chemical reactions such as complete chloromethylation, complete tertiary amination and incomplete methylation, so as to prepare a single piece-type bipolar film roll having a compact structure, a clear middle interface, a high mechanical strength and a stable quaternary amino group, and the product qualification rate is high; and the single piece-type bipolar film roll is suitable for a bipolar film electrodialysis engineering application of an organic material-containing system.

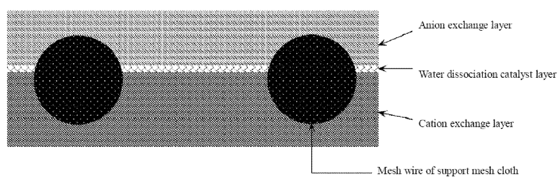


FIG.1

EP 4 197 624 A1

## Description

### FIELD OF TECHNOLOGY

The present disclosure belongs to the field of functional polymer film processing and particularly relates to a single piece-type bipolar film roll with a mesh cloth support and a manufacturing method therefor.

### BACKGROUND

A bipolar film generally has a three-layer structure in a thickness direction (refer to Technical Manual for Bipolar Films, Chemical Industry Press, published in July 2004, pages 75-89), i.e., an anion exchange layer (generally containing a strongly basic quaternary amino group), an intermediate interface layer (generally containing a weakly acidic group such as a carboxylic acid group, a weakly basic group such as a tertiary amino group, or a metal ion complex to exert a water dissociation catalytic action), and a cation exchange layer (generally containing a strongly acidic sulfonic acid group). The intermediate interface layer can be positioned very clearly between the anion exchange layer and the cation exchange layer, and only has a nanoscale thickness. For example, described in the journal literature (Electrochimica Acta,1986,31(9): 1175-1176): a specific metal ion (such as a ferrous ion) is coated on a surface of a cation exchange film, and then an anion exchange film layer is superposed and pressed to obtain a bipolar film piece with a clear intermediate interface. For another example, patent document No. 201610776267.9 discloses: a compound formed by complexing polyethyleneimine or polypropylene imine and metal ions is used as an intermediate interface layer, the intermediate interface layer is firstly coated on an anion exchange film, and a cation exchange film layer is coated after drying to obtain a bipolar film with a three-layer structure. Therefore, the intermediate interface layer with a water dissociation catalysis function can catalyze ionization of a water molecule into a hydrogen ion and hydroxide under the action of a direct current electric field to exert an effect of a bipolar film.

The bipolar film is generally obtained by coating an interface layer on a surface of a cation exchange film and then compounding an anion exchange layer, or coating an interface layer on a surface of an anion exchange film and then compounding a cation exchange layer. That is, the bipolar film has a very clear intermediate interface layer and is essentially at least two layers (meaning a cation exchange layer and an anion exchange layer with a significant thickness, and an intermediate interface layer with a too thin thickness to be generally negligible) physically bonded together. Therefore, the whole bipolar film is inhomogeneous throughout a thickness direction, i.e. a base material is not the same. Such bipolar film may be referred to simply as a layer-bonded type bipolar film. Since the intermediate layer interface is clear, a transmembrane voltage required to catalyze dissociation of water molecules is relatively low (generally less than 1.5 V) and a bipolar film electrodialysis process (BPED) has a relatively low energy consumption. However, if the two layers are not firmly bonded, ballooning is easy to occur when the bipolar film runs for a long time in a strong acid and strong alkali solution environment, or the two layers are directly separated due to an obvious difference of a swelling degree in an organic acid and alkali solution environment, such that a service life of the bipolar film is rapidly shortened; namely, the advantages and disadvantages of the layer-bonded type bipolar film are all obvious.

In addition, a catalytic layer of the bipolar film can also be mixed in a whole cation exchange layer or a whole anion exchange layer, i.e. the catalytic interface is not clear, such that the water dissociation process occurs in a single certain exchange layer. For example, in a single piece-type bipolar film disclosed in patent document CN 102061004B, a tertiary amino group (obtained by reacting dimethylamine in an amination mixture) having a catalytic action is distributed throughout a whole anion exchange layer. Such bipolar film is generally prepared by firstly performing a single-sided functionalization reaction (e.g., a single-sided sulfonation reaction) on a base film (e.g., a base film comprising crosslinked polystyrene) used for chemical reaction, and then performing a functionalization reaction (e.g., a chloromethylation or a mixed amination reaction) on the other side. Since the two layers are obtained by respectively performing different functionalization reactions on two sides of the same base film, different functional groups are actually still in the same base film, such that the bipolar film may be called a single piece-type bipolar film. The single piece-type bipolar film has a very long service life and does not show a structural defect of a two-layer separation. However, since the catalytic group (such as a tertiary amino group) is distributed in one layer, namely the catalytic interface is not clear, the transmembrane voltage required to catalyze dissociation of water molecules is higher. Meanwhile, a hydrogen ion obtained by the water dissociation in an anion exchange layer cannot be transmitted out through a cation exchange layer in time (a positively charged quaternary amino group will delay the transmission of the hydrogen ion as well), and may be neutralized with a hydroxide ion, such that the current efficiency of the water dissociation is reduced. In addition, the existing single piece-type bipolar film based on a dipping and soaking base film is not embedded with a high-strength support mesh cloth, such that the film is too soft, namely not sufficient in compactness and strength. When the single piece-type bipolar film is applied in the bipolar film electrodialysis engineering, an obvious "salt pollution" occurs, and thus the purity of the generated acid and alkali is reduced (1-2% of salt may be contained). This is because any layer of the single piece-type bipolar film is not compact enough and thus migration of the same ions cannot be completely

blocked. Meanwhile, the bipolar film is looser during use under a high current density, and continuously wrinkled and deformed and difficult to recover, which is caused by insufficient overall strength of the bipolar film. Furthermore, the quaternary amino group (i.e., a benzyltrimethylammonium group, commonly known as a strong alkali type I quaternary amino group), obtained by the reaction of trimethylamine, in the anion exchange layer, is unstable in a strong alkali solution environment where a hydroxide is transferred for a long period of time, and slowly degrades into a tertiary amino group or a benzyl alcohol group (refer to 1) Journal of Power Sources, 2018, 375: 170-184; and 2) Technical Manual for Bipolar Films, Chemical Industry Press, published in July 2004, page 136). This will result in a gradual increase in the resistance of the anion exchange layer, which is detrimental to the timely transfer of the hydroxide produced by the water dissociation out of the bipolar film. On the whole, the catalyst interface is unclear, the structure of the base film is not compact enough, the integral mechanical strength is insufficient, and the type I quaternary amino group is unstable, which are main structural defects of the existing single piece-type bipolar film and seriously affect service efficiency and service life of the single piece-type bipolar film.

Meanwhile, the existing single piece-type bipolar film is manufactured in a one-by-one mode, difficult to be manufactured in a large scale in a roll, has low production efficiency, and thus also has obvious performance differences among batches. Since a base film is obtained by dipping and soaking a styrene polymerization solution from a polyolefin base film, then the base film is subjected to a single-sided sulfonation to obtain a positive side film, finally the positive side film is completely chloromethylated and aminated to obtain a bipolar film, and all implementation steps will enable the film body to constantly swell, it is difficult to achieve a large-scale manufacturing without wrinkles and in rolls. Therefore, the bipolar film is only prepared by methods of "cutting a base film into multiple pieces for soaking", "closely attaching one side of the base film to a ceramic plate to achieve single-sided sulfonation", etc. piece by piece, and thus the production efficiency is low and repeatability and stability among batches, even of each film, are also difficult to be fully guaranteed. Thus, there are obvious defects in the manufacturing method for the single piece-type bipolar film.

## SUMMARY

Based on the above shortcomings and deficiencies in the prior art, one of the objectives of the present disclosure is to solve at least one or more of the above problems in the prior art. In other words, one of the objectives of the present disclosure is to provide a single piece-type bipolar film roll with a mesh cloth support and a manufacturing method therefor to meet one or more of the above needs. By optimizing the structure of the single piece-type bipolar film roll and improving its manufacturing method, catalytic interface clarity, structural compactness, overall mechanical strength and quaternary amino group chemical stability of the single piece-type bipolar film are improved, and a large-scale manufacturing in rolls is realized so as to improve production efficiency and yield.

In order to achieve the above objective, the present disclosure adopts the following technical solutions:
a single piece-type bipolar film roll with a mesh cloth support, wherein a crosslinked polystyrene-low molecular weight polyethylene composite base film roll with an ultra-high molecular weight polyethylene mesh cloth as a support is used as a base body, one side is a cation exchange layer formed by a sulfonated crosslinked polystyrene-low molecular weight polyethylene composite, the other side is an anion exchange layer formed by a quaternized crosslinked polystyrene-low molecular weight polyethylene composite, and a water dissociation catalyst layer formed by a tertiary aminated crosslinked polystyrene-low molecular weight polyethylene composite is arranged between the two sides.

As a preferred solution, the content of a benzenesulfonic acid group in the cation exchange layer is 1.0-1.8 mmol/g dry film, the content of a quaternary amino group in the anion exchange layer is 0.4-0.9 mmol/g dry film, and the content of a tertiary amino group in the water dissociation catalyst layer is 0.03-0.1 mmol/g dry film,
wherein the quaternary amino group in the anion exchange layer is benzyl dimethyl butyl ammonium and the tertiary amino group in the water dissociation catalyst layer is benzyl methyl butyl amine.

As a preferred solution, the single piece-type bipolar film roll has a wet film thickness of 0.15-0.4 mm in pure water.

As a preferred solution, the crosslinked polystyrene-low molecular weight polyethylene composite base film roll with an ultra-high molecular weight polyethylene mesh cloth as a support is prepared by using an ultra-high molecular weight polyethylene mesh cloth as a support, thermally spraying and applying low molecular weight polyethylene powder, soaking and dipping a polymerization monomer solution containing styrene and divinylbenzene, and performing polymerization to obtain a polymer network structure interpenetrated with a crosslinked polystyrene component and a linear polyethylene component.

The present disclosure further provides a manufacturing method for the single piece-type bipolar film roll according to any one solution, comprising the following steps:

(1) preparing a dipping and absorbing film roll

using an ultra-high molecular weight polyethylene mesh cloth as a support, thermally spraying and applying low molecular weight polyethylene micro powder, covering a protective film, performing winding, performing

pressurizing and preserving heat for a target time, and stripping the protective film after completing a hot rolling process to obtain a polyethylene film roll with a mesh cloth support; and

dipping the polyethylene film roll into a polymerization monomer solution containing styrene, divinyl benzene and an initiator for dipping and absorbing, and performing winding to obtain a dipping and absorbing film roll after completing the dipping and absorbing;

(2) preparing a composite base film roll after dipping and absorbing
sequentially unwinding a protective film roll, the dipping and absorbing film roll, a spacing film roll and another dipping and absorbing film roll from top to bottom at the same time, and performing combined winding to obtain a composite base film roll after dipping and absorbing, wherein a width of the protective film roll is greater than that of the dipping and absorbing film roll, such that two sides of the protective film roll in the composite base film roll respectively extend out of two sides of the dipping and absorbing film roll; and a width of the spacing film roll is less than that of the dipping and absorbing film roll, such that two sides of the spacing film roll in the composite base film roll are respectively positioned within two sides of the dipping and absorbing film roll;

(3) preparing a polymerized composite base film roll
placing the composite base film roll after dipping and absorbing in a nitrogen atmosphere for polymerization, and stripping the protective film after completing the polymerization to obtain a polymerized composite base film roll;

(4) preparing a single-sided sulfonated composite positive film roll
unwinding the polymerized composite base film roll, dipping the film into a sulfonation tank containing chlorosulfonic acid and concentrated sulfuric acid, performing sulfonation reaction at a constant temperature, sequentially passing the film through a plurality of dilution tanks containing sulfuric acid with different concentrations, then dipping the film into a water washing tank for washing clean, online blow-drying the film using a hot air blower, and continuously winding the film to obtain a single-sided sulfonated composite positive film roll;

(5) preparing a positive film roll to be reacted with a blank side outward

unwinding the single-sided sulfonated composite positive film roll, striping off the film online, taking out the spacing film, and winding the film to obtain two single-sided sulfonated positive film rolls; and

unwinding the rolls by sticking sulfonated sides of the two single-sided sulfonated positive film rolls together, at the same time inserting a plastic separation mesh roll during the unwinding, and performing winding to obtain a positive film roll to be reacted with a blank side outward;

(6) performing a complete chloromethylation reaction
placing the positive film roll to be reacted with a blank side outward into a reaction tank with a top fluid distributor and a bottom sieve plate, connecting a top inlet and a bottom outlet to a pump body, injecting a chloromethylation reaction solution, starting the pump body to circulate the reaction solution in the reaction tank, and performing a chloromethylation reaction at a set temperature until the reaction is complete;

(7) performing a complete tertiary amination reaction

extracting out the chloromethylation reaction solution, injecting dichloroethane for washing for several times, and extracting out the dichloroethane; and

injecting a tertiary amination reaction solution, starting the pump body to circulate the reaction solution in the reaction tank, and performing a tertiary amination reaction at a set temperature until the reaction is complete;

(8) performing an incomplete methylation reaction

extracting out the tertiary amination reaction solution, injecting dichloroethane for washing for several times, and extracting out the dichloroethane; and
injecting a methylation reaction solution, starting the pump body to circulate the reaction solution in the reaction tank, and performing a methylation reaction at a set temperature to a set reaction degree; and

(9) transforming a bipolar film

immediately extracting out the methylation reaction solution, injecting methanol for washing for several times, and injecting saline water for washing for several times; and

integrally taking out the film roll and respectively winding after unwinding to obtain two single piece-type bipolar film rolls.

As a preferred solution, in step (2), the protective film roll is made of polyester, has a thickness of 0.05-0.15 mm, and has a width 2-10 cm greater than that of the dipping and absorbing film roll.

As a preferred solution, in step (2), the spacing film is made of polyimide, polyvinylidene fluoride or ultra-high molecular weight polyethylene, has a thickness of 0.04-0.1 mm, and has a width 2-10 cm less than that of the dipping and absorbing film roll.

As a preferred solution, in step (4), a mass concentration of the concentrated sulfuric acid in the sulfonation tank is more than or equal to 95% and a mass ratio of the chlorosulfonic acid to the concentrated sulfuric acid is 1:(0.6-2); and the sulfonation reaction is performed at a temperature of 20-45°C for 45-90 min.

As a preferred solution, in step (7), the tertiary amination reaction solution is a mixed solution of dichloroethane and N-methylbutylamine, and a mass concentration of the N-methylbutylamine is 5-20%; and the tertiary amination reaction is performed at 45-70°C for 3-10 h.

As a preferred solution, in step (8), the methylation reaction solution is a mixed solution of dichloroethane and methyl iodide, and a mass concentration of the methyl iodide is 0.5-2%; and the methylation reaction is performed at a temperature of 20-35°C for 5-10 h.

Compared with the prior art, the present disclosure has the following beneficial effects:

(1) Since the single piece-type bipolar film roll of the present disclosure uses a high-strength ultrahigh molecular weight polyethylene mesh cloth as a support on a whole (penetrating through a thickness direction of the whole film body), the mechanical strength of the film is ensured. Compared with the existing single piece-type bipolar film roll without a mesh cloth support, the single piece-type bipolar film roll of the present disclosure has a smaller deformation, i.e. is more durable in a bipolar film electrodialysis process (BPED).

(2) The low molecular weight polyethylene of the present disclosure for dipping and absorbing a styrene polymerization monomer solution can be compatible and firmly fused with an ultra-high molecular weight polyethylene mesh cloth after thermal spraying and applying and hot rolling treatment to form a high-molecular alloy structure with highly fused "ultra-high molecular weight polyethylene mesh cloth, low molecular weight polyethylene base film, and crosslinked polystyrene to-be-reacted base body" after polymerization. Therefore, the manufactured single piece-type bipolar film roll has a very compact internal structure, can obviously improve current efficiency of acid and alkali production in the BPED process, reduces a "salt pollution" caused by the insufficient compactness of the bipolar film, and improves acid and alkali production quality (less salt impurities in an acid solution or alkali solution).

(3) The present disclosure uses a more reasonable amination route. The quaternary amino group contained in the anion exchange layer is phenyl dimethyl butyl ammonium which is more resistant to strong alkali solution environment, has better chemical stability than benzyltrimethylammonium (strong alkali type I) commonly used by the existing single piece-type bipolar film, and cannot be gradually degraded into a tertiary amino group in use. Meanwhile, the phenyl dimethyl butyl ammonium has enough alkalinity, and thus the anion exchange capacity of the phenyl dimethyl butyl ammonium to a hydroxide generated by water dissociation can be ensured.

(4) The present disclosure obtains a clearer interface of the water dissociation catalyst layer than the existing single piece-type bipolar film, thereby reducing the transmembrane voltage of the bipolar film, namely reducing the energy consumption in the BPED process. The water dissociation of the existing single piece-type bipolar film is generated by the catalysis of the tertiary amino groups distributed in the whole anion exchange layer. The existing single piece-type bipolar film has no specific catalyst layer interface. In this way, a hydrogen ion generated by the water dissociation is "hindered from migrating" (because a quaternary amino group, which is also positively charged, repels the migration of the hydrogen ion) throughout the anion exchange layer and randomly binds with a hydroxide generated by the water dissociation to form a water molecule, thereby reducing the current efficiency of the water dissociation. However, the tertiary amino group playing the role of water dissociation catalysis in the present disclosure is relatively concentrated in a middle part of the film thickness, and thus the side effect of the "hindered migration" of the hydrogen ion is much lower and the practicability of the present disclosure is improved.

(5) The manufacturing method for the single piece-type bipolar film roll can continuously perform sulfonation in rolls instead of performing single-sided sulfonation reaction piece by piece and can obtain a single-sided sulfonated

composite positive fill roll with a uniform chemical property as long as equipment precision and an automation level are proper. The subsequent chloromethylation and tertiary amination reactions in the reaction tank are complete reactions, which are easy to perform as long as the reaction time is sufficient. Besides, there is no technical risk of obtaining an unqualified intermediate product due to excessive reaction. With regard to the finally performed incomplete methylation reaction, as long as the top inlet and the bottom outlet of the reaction tank are reasonably designed and then the pump body is connected, a circulation flow of the solution in the "piston flow" type tank is not difficult to realize. Besides, since the high-strength mesh cloth has an anti-swelling effect, a swelling effect of the hydrophobic dichloroethane reaction solvent on the hydrophilic tertiary amino group and quaternary amino group is very limited, such that the methylation reaction can be controllably performed gradually from the surface of the completely tertiary aminated film to inside, a quaternary amine-rich anion exchange layer is obtained, and a tertiary amine catalyst layer that has not been methylated is left in the middle part of the film thickness. This ensures that the preparation process can be performed stably in rolls and a single piece-type bipolar film roll with a uniform intra batch performance and a high inter batch repeatability can be obtained. The controllability, stability and efficiency of the manufacturing process are ensured from the technical route, implementation method, raw material selection, manufacturing equipment level, automation level and other aspects.

## BRIEF DESCRIPTION OF THE DRAWINGS

FIG. 1 is a structural schematic diagram of a single piece-type bipolar film roll with a mesh cloth support of the examples of the present disclosure;

FIG. 2 is a cross-sectional structural schematic diagram of a film roll in each step of a manufacturing method for a single piece-type bipolar film roll with a mesh cloth support of the examples of the present disclosure;

FIG. 3 is a preparation flow chart of a composite base film roll after dipping and absorbing of the examples of the present disclosure;

FIG. 4 is a relationship diagram showing changes of a sulfonation degree and a cation exchange capacity of a small film sample used in Example 1 of the present disclosure along with sulfonation reaction time;

FIG. 5 is a relationship diagram showing changes of the obtained chlorine content in a chloromethylation process of a small film sample used in Example 1 of the present disclosure along with chloromethylation reaction time;

FIG. 6 is a relationship diagram showing changes of the obtained content of a tertiary amino group of a small film sample used in Example 1 of the present disclosure along with tertiary amination reaction time;

FIG. 7 is a relationship diagram showing changes of the obtained generation amount of a quaternary amino group and the residual amount of a tertiary amino group of a small film sample used in Example 1 of the present disclosure along with methylation reaction time; and

FIG. 8 is a relationship diagram showing changes of the retained amount of a quaternary amino group in an anion exchange layer of the bipolar film prepared by the examples and the comparative examples of the present disclosure along with alkali solution soaking time.

## DETAILED DESCRIPTION OF THE EMBODIMENTS

The present disclosure uses an ultra-high molecular weight polyethylene mesh cloth as a support, one side is a cation exchange layer formed by a sulfonated crosslinked polystyrene-low molecular weight polyethylene composite, the other side is an anion exchange layer formed by a quaternized crosslinked polystyrene-low molecular weight polyethylene composite, and a middle is a water dissociation catalyst layer formed by a tertiary aminated crosslinked polystyrene-low molecular weight polyethylene composite, and the three layers together constitute a single piece-type bipolar film roll. However, the single piece-type bipolar film roll is only divided into three layers in thickness according to the difference of contained chemical functional groups and has a strictly single piece-type structure since the three layers are actually all tightly arranged in the same base film roll.

As shown in FIG. 1, the cation exchange layer contains a benzenesulfonic acid group which is a product after sulfonating a crosslinked polystyrene component in one side of the base film; the water dissociation catalyst layer contains

a tertiary amino group of benzyl methyl butyl amine which is a product obtained by sequentially performing a complete chloromethylation reaction and complete tertiary amination reaction on a crosslinked polystyrene component in the other side of the base film; and the anion exchange layer contains a quaternary amino group of benzyl dimethyl butyl ammonium which is a product obtained by sequentially performing a complete chloromethylation reaction, a complete tertiary amination reaction, and a methylation reaction on the crosslinked polystyrene component in the other side of the base film. The support mesh cloth (mesh wire) integrally penetrates through the film body and the cation exchange layer containing a benzenesulfonic acid group is obtained after the single-sided sulfonation reaction; then the water dissociation catalyst layer is obtained after containing a tertiary amino group in a type of benzyl methyl butyl amine after the complete chloromethylation and complete tertiary amination reaction of the other side; and the anion exchange layer containing a quaternary amino group in a type of benzyl dimethyl butyl ammonium is obtained after an incomplete methylation reaction. The water dissociation catalyst layer is an "extruded" functional layer when the cation exchange layer and the anion exchange layer are prepared, and generally has a thickness of only micron-sized (several to dozens of microns). The thickness of the cation exchange layer is generally significantly greater than that of the anion exchange layer. Since a migration speed of a hydrogen ion generated after water dissociation in the cation exchange layer is faster than that of a hydroxide generated in the anion exchange layer, it is necessary to provide a significant difference in thickness to balance the difference between the migration speeds. Chemical structural formulas of groups contained in the three layers are shown in Table 1.

**Table 1 Chemical structure formulas of contained groups in each layer of single piece-type bipolar film roll**

| Name of layer | Chemical structure formula of contained group |
|---|---|
| Anion exchange layer | 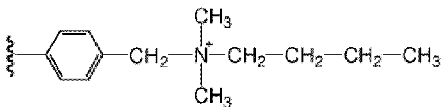 |
| Water dissociation catalyst layer | 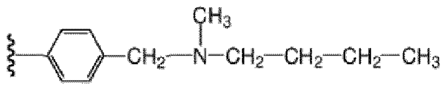 |
| Cation exchange layer | 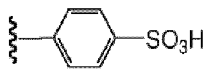 |

The three layers are closely connected and positioned in the same interpenetrated polymer network consisting of crosslinked polystyrene and linear polyethylene and prepared by using a crosslinked polystyrene-low molecular weight polyethylene composite base film roll with an ultra-high molecular weight polyethylene mesh cloth as a support through multiple steps of chemical reactions step by step. Therefore, the three layers can be divided only on a micrometer scale. The composite base film roll is prepared through hot applying low molecular weight polyethylene powder to an ultra-high molecular weight polyethylene mesh, then dipping and absorbing a polymerization monomer solution containing styrene and divinyl benzene, and performing polymerization to obtain a polymer network structure interpenetrated with a crosslinked polystyrene component and a linear polyethylene component. In particular, the previous study of the applicant, patent document with the publication patent number of CN 108752681B can be referred in the manufacturing of the composite base film roll.

Besides, the content of a benzenesulfonic acid group in the cation exchange layer is 1.0-1.8 mmol/g dry film, the content of a quaternary amino group in the anion exchange layer is 0.4-0.9 mmol/g dry film, and the content of a tertiary amino group in the water dissociation catalyst layer is 0.03-0.1 mmol/g dry film. It should be pointed out that the content of groups in each layer is based on the whole dry film; and in practice, the crosslinked polystyrene component in each layer is almost chemically reacted accordingly, such that the content of groups calculated as a single layer is higher than the above-mentioned value. If the content of the benzenesulfonic acid group in the cation exchange layer is less than 1.0 mmol/g dry film or the content of the quaternary amino group in the anion exchange layer is less than 0.4 mmol/g dry film, the film resistance of the layer is too large, which is not beneficial to timely migration of a hydrogen ion and a hydroxide after water dissociation. Besides, if the content of the benzenesulfonic acid group in the cation exchange layer is more than 1.8 mmol/g dry film or the content of the quaternary amino group in the anion exchange layer is more than 0.9 mmol/g dry film, the layer is excessively hydrophilic, and a swelling degree of the film body in an aqueous solution is excessively large, which does not facilitate the stability of the film structure, and also weakens a supporting effect of the mesh cloth and reduces the density of the bipolar film. The thickness of the water dissociation catalyst layer with a tertiary amino group must be thin enough to ensure that the film resistance of the anion exchange

layer is not affected due to the fact that alkalinity of the tertiary amino group is not as good as that of the quaternary amino group on the premise of having an enough water dissociation catalysis effect, that is, the content of the tertiary amino group must not be too high and must be less than 0.1 mmol/g dry film, which requires precise control of a degree of incomplete reaction of the methylation reaction. Meanwhile, if the content of the tertiary amino group in the water dissociation catalyst layer is lower than 0.03 mmol/g dry film, the methylation reaction tends to be complete, the cation exchange layer and the anion exchange layer tend to be directly connected, the interface of the middle layer becomes very vague, the water dissociation catalysis effect of the middle interface is difficult to exert, and a qualified single piece-type bipolar film product cannot be obtained.

As shown in FIG. 2, A is a cross-sectional structure of the composite base film roll obtained in step (2) and a protective film, a dipping and absorbing film, a spacing film and a dipping and absorbing film are sequentially arranged from top to bottom; and the ultra-high molecular weight polyethylene mesh cloth is firstly applied with low molecular weight polyethylene powder, hot-rolled into a thin film, and then dips and absorbs a polymerization solution containing styrene and divinylbenzene to obtain the dipping and absorbing film. B is a cross-sectional structure of the polymerized composite base film roll obtained in step (3) and the protective film is stripped off in B compared with A. C is a cross-sectional structure of the single-sided sulfonated composite positive film roll obtained in step (4) and the blank side that has not been sulfonated is still closely attached to the spacing film. D is a cross-sectional structure of the positive film roll to be reacted with a blank side outward obtained in step (5), the spacing film is stripped off in D compared with C, a plastic separation mesh is inserted and re-winding is performed, and unreacted blank sides both face outwards so as to be beneficial to uniform contact and chemical reaction with a subsequent reaction reagent. E is a cross-sectional structure of the tertiary aminated prefabricated bipolar film obtained in step (7) and the plastic separation mesh still remains so as to be beneficial to continue to perform an incomplete methylation reaction in step (8).

Specifically, the manufacturing method for a single piece-type bipolar film roll with a mesh cloth support according to the examples of the present disclosure comprises the following steps:

Step (1), preparing a dipping and absorbing film roll: using an ultra-high molecular weight polyethylene mesh cloth as a support, thermally spraying and applying low molecular weight polyethylene micro powder, covering a polyester protective film, performing winding, performing pressurizing and preserving heat for a period time, and stripping the protective film after completing a hot rolling process to obtain a polyethylene film roll with a mesh cloth support; and dipping the polyethylene film roll into a polymerization monomer solution containing styrene, divinyl benzene and an initiator, and performing winding to obtain a dipping and absorbing film roll after completing the dipping and absorbing process.

The ultra-high molecular weight polyethylene mesh cloth is formed by melting an ultra-high molecular weight polyethylene (UHMWPE) particle with a viscosity average molecular weight equal to or more than 1 million, and performing spinning and weaving. The mesh cloth has a wire diameter of 0.04-0.12 mm, a thickness of 0.06-0.20 mm, and the mesh number of 50-200 meshes. The low molecular weight polyethylene micro powder is made of low density polyethylene (LDPE), linear low density polyethylene (LLDPE), and metallocene linear low density polyethylene (MLLDPE), and has a particle size range controlled to be 1-20 $\mu$m and a melt flow rate (melt index) is equal to or more than 20 g/10 min. In the polymerization monomer solution containing styrene, divinyl benzene and an initiator, divinylbenzene in the pure product (the purity of the industrial product is generally lower than 80%) shall account for 3-10% of the mass of the whole polymerization monomer solution and conventional benzoyl peroxide may be used as the initiator.

Step (2), preparing a composite base film roll after dipping and absorbing: sequentially unwinding a wider protective film roll, the dipping and absorbing film roll, a narrower spacing film roll, a dipping and absorbing film roll, etc. from top to bottom at the same time, maintaining tension, and performing combined winding to obtain a composite base film roll after dipping and absorbing.

The wider protective film roll is made of polyester, has a thickness of 0.05-0.15 mm, and has a width 2-10 cm greater than that of the dipping and absorbing film roll. If the thickness is too thin, the strength is insufficient, the film surface is easy to "wrinkle", and the flatness of the composite base film roll is difficult to ensure during the combined winding. If the thickness is too thick, the rigidity of the film surface is obvious, which is not conductive for maintaining a constant tension and brings bubbles in during the combined winding. In order to effectively isolate the dipping and absorbing film roll to prevent bonding and aggregation together, the width of the protective film roll is at least 2 cm greater than that of the dipping and absorbing film roll, namely that two sides respectively "extend out" by at least 1 cm. In order to save a protective film material (generally, a wrinkled and white sticking substance is left after use and the material is therefore difficult to reuse), the protective film should not "extend out" too much, preferably less than or equal to 5 cm per side, equivalent to the width of the protective film is at most 10 cm greater than that of the dipping and absorbing film roll.

The narrower spacing film is made of polyimide, polyvinylidene fluoride or ultra-high molecular weight polyethylene, has a thickness of 0.04-0.1 mm, and has a width 2-10 cm less than that of the dipping and absorbing film roll. The three materials of the spacing film are selected because they are resistant to the subsequent sulfonation reaction and can keep the spacing film to be closely attached to the polymerized polyethylene/polystyrene composite film with a mesh cloth support (see B in FIG. 2) in the continuous sulfonation reaction process, thereby completing the single-sided sulfonation process. In practice, it is found that the polyester protective film is not resistant to the sulfonation

reaction. Even if a concentrated sulfuric acid/chlorosulfonic acid mixture with a not-too-high concentration penetrates from an outer surface of the polymerized composite base film, the polyester film is also difficult to resist and easily "burned through" locally, such that the sulfonation reaction also occurs inside the composite base film and a single-sided sulfonated composite positive film cannot be obtained (see C in FIG. 2). Besides, the spacing film made of polytetrafluoroethylene (PTFE) has a very small adhesive force. After the sulfonation reaction is performed to a certain degree and the single-sided sulfonated composite positive film swells in the sulfonation reaction solution, the PTFE spacing film will be rapidly separated from the single-sided sulfonated composite positive film, such that the sulfonation reaction solution can still "leak" in and the sulfonation reaction can occur in the composite base film. It is also found that the polyimide spacing film has an adhesive force to the single-sided sulfonated composite positive film slightly better than that of the polyvinylidene fluoride spacing film and the ultra-high molecular weight polyethylene spacing film, but shows wrinkles after stripped off, and could not be reused as the latter two.

The width of the spacing film should be at least 2 cm less than that of the dipping and absorbing film roll, i.e., two sides are at least "indented" by 1 cm, such that edges of the dipping and absorbing film rolls of consistent width are in sufficient contact and sticking, and fused together completely after polymerization. Therefore, the sulfonation reaction solution can be completely prevented from permeating into the interior of the composite base film roll from edge parts to ensure that the sulfonation reaction process of the polymerized composite base film roll is strictly a permeation reaction process from two outer surfaces to an inside gradually, and thus the single-side sulfonated composite positive film in a strict sense is obtained. Obviously, compared with the dipping and absorbing film, the more the spacing film is "indented", the more effective the sealing effect on the edges of the dipping and absorbing film after polymerization (since the fusion surface is larger). But if the spacing film is "indented" too much, a fusion degree is too large, two rolls of the single-sided sulfonated film are difficult to strip off, and at the same time, more film materials are wasted (compared with the middle part adhered with the spacing film, the swelling degree in an aqueous solution after the bipolar film is manufactured is usually slightly different, such that the edge parts of the bipolar film roll are required to be cut off frequently). Thus, it is preferred that both sides of the spacing film are "indented"less than or equal to 5 cm, i.e., the width of the spacing film is at most 10 cm less than that of the dipping and absorbing film roll. The thickness of the spacing film is 0.04-0.1 mm. If the spacing film is too thin, it will distort, deform and wrinkle since the spacing film cannot bear an adhesive stress between it and the dipping and absorbing films. If the thickness is too thick, too many "bulges" will appear between two rolls of dipping and absorbing films, such that the edges are difficult to be in close contact, adhered and completely fused.

As shown in FIG. 3, four film rolls of a wider protective film roll, a dipping and absorbing film roll, a narrower spacing film roll, and a dipping and absorbing film roll, are arranged from top to bottom, and simultaneously unwound and wound so as to obtain a composite base film roll after dipping and absorbing. The process is generally performed in a constant temperature and constant humidity operating space, as a clean workshop commonly used in the film industry, without other special requirements.

Step (3), preparing a polymerized composite base film roll: placing the composite base film roll after dipping and absorbing in a nitrogen atmosphere, performing heating and insulation according to a program, completing polymerization, and stripping the wider protective film to obtain a polymerized composite base film roll.

The composite base film roll after dipping and absorbing can be pre-wound with 3-10 circles of the wider polyester protective film, then clamped by two semi-cylindrical stainless steel clamps, integrally placed in a stainless steel tank body with nitrogen protection and temperature-controlled heating functions, and then subjected to polymerization according to a conventional heating program of crosslinked polystyrene free radical polymerization, such as prepolymerization at 60-70°C for 1-2 hours, polymerization at 70-80°C for 2-3 hours, and post-polymerization at 80-90°C for 8-15 hours so as to complete the polymerization. The nitrogen pressure in the tank body is maintained unchanged and the internal pressure is preferably maintained to be 1-2 atmospheric pressures, namely, a positive pressure of less than or equal to 1 atmospheric pressure is maintained, such that non-polymerized gas is prevented from overflowing and the clamping of the composite base film roll after dipping and absorbing is promoted. The polymerization process is preferably performed in stages, such that a polymerization heat energy can be released slowly and the composite base film roll is prevented from deformation and unevenness caused by implosion. In the post-stage of the polymerization, it is necessary to maintain sufficient post-polymerization time at a higher temperature to ensure complete polymerization to obtain a high-molecular alloy structure with ultra-high molecular weight polyethylene mesh cloth, low molecular weight polyethylene applied film, and crosslinked polystyrene interpenetrating each other. In order to reduce the degree of thermal expansion of the composite base film roll, the temperature of the whole polymerization process should be ensured uniform and not exceed 100°C. Therefore, it is necessary to provide temperature sensors at different portions of the tank body and to provide an axial flow fan inside the tank to promote a circulation flow of internal nitrogen. Preferably, the tank body is integrally arranged in a hot water tank with an internal circulating pump, and the temperature in the tank is linked to control the water bath temperature in the hot water tank, such that the polymerization process is stable, uniform and complete to a greater extent, and the composite base film roll with no deformation in appearance and uniform internal structure is obtained. After the polymerization is completed, the clamp is integrally taken out of the tank body and disassembled, the polyester protective film on the periphery of the composite film roll is unwound, and the polyester

protective film and the composite base film stripped from the polyester protective film are respectively wound to obtain the polymerized composite base film roll with two fused sides and the middle embedded with the spacing film. In practice, the stripped polyester protective film is either too thin to show obvious wrinkles or too thick to be adhered with a small amount of a white oligomer, and thus is difficult to reuse for preparing a composite base film.

As shown in FIG. 2, B shows that the polymerized composite base film roll is formed by two polymerized polyethylene/polystyrene composite film rolls with a mesh cloth support and the spacing film roll embedded therein by edge fusion, and has a thickness about 0.3-0.6 mm. The thickness of the single-layer polymerized composite film roll is 0.12-0.25 mm (the wet film thickness after the single piece-type bipolar film is prepared is about 0.15-0.3 mm), and the thickness of the spacing film is 0.04-0.1 mm.

Step (4), preparing a single-sided sulfonated composite positive film roll: slowly unwinding the polymerized composite base film roll, dipping the film into a sulfonation tank containing chlorosulfonic acid and concentrated sulfuric acid, performing sulfonation reaction at a constant temperature, sequentially passing the film through a plurality of dilution tanks containing sulfuric acid with different concentrations, then dipping the film into a water washing tank for washing clean, online blow-drying the film using a hot air blower, and continuously winding the film to obtain a single-sided sulfonated composite positive film roll.

A mass concentration of the concentrated sulfuric acid in the sulfonation tank is more than or equal to 95% and a mass ratio of the chlorosulfonic acid to the concentrated sulfuric acid is 1:0.6 to 1:2. The sulfonation ability of the concentrated sulfuric acid is inferior to that of chlorosulfonic acid. If the chlorosulfonic acid is not added and only the concentrated sulfuric acid is used as a sulfonation reagent, a swelling agent (such as dichloroethane, dimethylformamide and the like) is required to be added to swell the composite base film roll; at the same time, the required sulfonation reaction degree can only be obtained at a higher reaction temperature (such as more than or equal to 60°C); and thus an extra reagent consumption is increased and uncertain reaction control factors are brought because the base film is swelled by an organic solvent. If the added chlorosulfonic acid is insufficient, for example, the mass ratio of the chlorosulfonic acid to the concentrated sulfuric acid is less than 1:2, the sulfonation should be performed very slowly and an unwinding speed of the composite base film roll is very slow so as to ensure residence time in the sulfonation tank to be long enough, which will seriously restrict the production efficiency. Conversely, if the added chlorosulfonic acid is excess, for example, the mass ratio of the chlorosulfonic acid to the concentrated sulfuric acid is greater than 1:0.6, the sulfonation reaction is very severe, and the composite base film roll will be "burned out" (the film surface quickly becomes black and the internal structure is damaged). Under the stipulation of the proportion, the sulfonation reaction can be performed at a constant temperature, the temperature is set to be 20-45°C (as long as the sulfonation temperature is lower than or equal to 50°C, the overflowing acid gas is very little), the retention time (from the beginning of the dipping to complete taking out, representing the effective sulfonation time) of the composite base film roll in the sulfonation tank is 45-90 min, and the time range is relatively favorable for field operation. Under the above sulfonation reaction conditions, the sulfonation processes of the upper and lower surfaces of the polymerized composite base film roll will be performed simultaneously and to the same extent, i.e., both proceeding from the surfaces to the inside toward the direction of the spacing film at the middle position of the thickness. As long as the sulfonation reaction time is controlled, a single-sided sulfonated composite positive fill roll in a strict sense (the cross-sectional structure is shown as C in FIG. 2) can be obtained.

The determination of the required sulfonation degree may be determined by setting up a sulfonation preliminary test, with reference to the test result: cutting a plurality of small strips, such as 20 samples of 5×10 cm, from the same roll of the polymerized composite base film, dipping the samples in a constant-temperature sulfonation tank (an upper part of the sample is hung by a stainless steel wire and a lower part is tied with a lead weight to ensure that the sample can be taken out and completely dipped timely), taking out one piece of the samples every other 5 or 10 min, washing the samples clean with deionized water, striping off the spacing film to obtain two single-sided sulfonated film samples, respectively cutting the samples, referring to the determination of exchange capacity of hydrogen type strongly acidic cation exchange resin (GB/T 8144-2008) to take the average value of the two samples (observe the consistency by the way) to obtain a relationship diagram between the cation exchange capacity (i.e. the content of a benzenesulfonic acid group, mmol/g dry film) and the sulfonation degree (referring to a ratio of the measured value of the cation exchange capacity to the maximum value when all the crosslinked polystyrene components in the base film are sulfonated, %), and sulfonation reaction time (min). Referring to FIG. 4, the residence time required in the sulfonation tank can be obtained from the diagram according to the required reaction degree (the value range is 60-80%), so as to calculate an unwinding linear speed of the composite base film roll after polymerization and a winding linear speed of the composite positive film roll (both speeds should be consistent).

After the sulfonation, the film roll sequentially passes through a plurality of dilution tanks containing sulfuric acid with different concentrations, the chlorosulfonic acid and concentrated sulfuric acid on the surface and inside of the film roll are "washed away" by the gradient dilution method, such that the single-sided sulfonation reaction is rapidly terminated, and rapid swelling and obvious wrinkles of the single-side sulfonated film roll caused by direct washing with water can also be avoided. During the dilution process, sulfuric acid aqueous solutions with at least four different concentrations are used, and the mass concentration is gradually reduced, for example, the mass concentration can be

respectively set to 70%, 50%, 30% and 10%. Then the film roll is dipped into the water washing tank to wash clean the residual dilute acid on the film roll with clean water. However, since the moisture in the single-sided sulfonated wet film can delay the speed of the chloromethylation reaction in the subsequent step, a hot air blower is needed to blow the film roll dry online, the film roll is then continuously wound to obtain the single-sided sulfonated composite positive film roll, and the spacing film is still embedded in the film roll.

Step (5), preparing a positive film roll to be reacted with a blank side outward: unwinding the single-sided sulfonated composite positive film roll, striping off the film online, taking out the spacing film, and winding the film to obtain two single-sided sulfonated positive film rolls and a spacing film roll; and unwinding the rolls by sticking sulfonated sides of the two single-sided sulfonated positive film rolls together, at the same time inserting a plastic separation mesh roll at a bottom part during the unwinding, and performing winding together to obtain a positive film roll to be reacted with a blank side outward.

Generally, the sulfonated surfaces of two sides of the single-sided sulfonated composite positive film roll slightly swell after the sulfonation and a swelling stress is transmitted to the inside, such that two (rolls of) the single-sided sulfonated positive film can be easily stripped off from the edges; and the binding of the spacing film and the blank side of the single-sided sulfonated positive film is not firm than that before the sulfonation, such that the spacing film can be easily stripped off. In this way, the films can be easily separated for winding using a winding machine with a constant tension to obtain two single-sided sulfonated positive film rolls and a spacing film roll.

The two single-sided sulfonated positive film rolls are re-unwound. According to a winding direction, the sulfonation surfaces of the two rolls are adhered together. Simultaneously, the plastic separation mesh roll is inserted at a bottom part and winding was performed together to obtain a positive film roll to be reacted with a blank side outward (see D in FIG. 2). Obviously, the reaction solution will pass through the plastic separation mesh and simultaneously and synchronously reacts with the blank sides of the two single-sided sulfonated positive film rolls. In order to facilitate the uniform flow of the reaction solution, the thickness of the plastic separation mesh should be suitable and is at least more than 1 mm. The diameter of the mesh and the weaving method also should be suitable. The diameter of the mesh is at least more than 3 mm and an injection molding extrusion mesh with a turbulence function is preferably used instead of a common woven mesh with warp and weft mixed weaving. Usually, the above requirements can be satisfied using a special separation mesh made of a thickened polyethylene or polypropylene electrodialysis unit.

Step (6), performing a complete chloromethylation reaction: fixing the positive film roll to be reacted with a blank side outward, integrally placing the positive film roll into a reaction tank with a top fluid distributor and a bottom sieve plate, connecting a top inlet and a bottom outlet to a pump body, sequentially injecting industrial chloromethyl ether and anhydrous tin chloride, starting the pump to stably circulate the solution in the tank, and performing a chloromethylation reaction at a set temperature until the reaction is complete.

The reaction tank should preferably be made of titanium alloy, at least 316L-type stainless steel, to resist chemical corrosion of a subsequent reaction system (industrial chloromethyl ether has an acidity similar to that of concentrated hydrochloric acid and contains a large amount of organic solvents). The top part of the reaction tank is provided with the fluid distributor so as to facilitate uniform "spraying" of the reaction solution. The bottom part of the reaction tank is provided with the sieve plate so as to facilitate stable placing of the whole fixed positive film roll to be reacted without displacement and shaking. The top inlet and the bottom outlet of the reaction tank are connected through a circulating pump (preferably, a corrosion-resistant diaphragm pump is used and the fluid transmission will be relatively stable), such that the solution in the tank can be circulated in an up-in and down-out mode after the pump is started. Then the reaction solution can always relatively uniformly pass through the plastic separation mesh all the time and fully contact with the surface of the film to be reacted so as to achieve a uniform reaction effect.

The industrial chloromethyl ether is injected to at least submerge the whole positive film roll to be reacted, preferably to be at least 20 cm higher than the upper surface of the film roll so as to avoid disturbance of a "jet flow" of the top distributor. The anhydrous tin chloride should be injected at least 1 hour after the industrial chloromethyl ether is injected to dip the film roll and should be continuously injected very slowly (preferably using a plunger pump capable of precisely controlling a flow rate) to prevent the excessive amount of the anhydrous tin chloride locally from causing the chloromethylation speed to be too fast and causing secondary cross-linking (refer to that the linked benzyl chloride group in the previous reaction attacks a benzene ring which is not reacted under the action of a catalyst to form a methylene group between two benzene rings to form chemical crosslinking). It is known that anhydrous ferric chloride, anhydrous zinc chloride, anhydrous aluminum chloride and anhydrous stannic chloride are generally used as catalysts for a chloromethylation reaction of crosslinked polystyrene polymeric microspheres. However, considering that the anhydrous ferric chloride, anhydrous zinc chloride and anhydrous aluminum chloride are solid powder, which is not beneficial to timely dissolution in the reaction tank without stirring, and that the anhydrous ferric chloride and anhydrous zinc chloride have a relatively slow catalytic reaction (such that the addition amount is large), and the anhydrous aluminum chloride has a too fast catalytic speed (which is easy to cause side crosslinking), the anhydrous stannic chloride is selected as a catalyst with the addition amount generally 2-5% (volume ratio) of the industrial chloromethyl ether. The chloromethylation reaction is performed at a temperature of 25-40°C. If the temperature is higher than 40°C, a side

crosslinking effect is easy to occur, such that the content of the benzyl chloride group is not enough. After the chloromethylation reaction is completed, all the reaction residual solution is timely extracted from the reaction tank and can be temporarily stored. Fresh industrial chloromethyl ether and anhydrous stannic chloride are supplemented in the next chloromethylation reaction, such that the reaction residual solution can be recycled for multiple times or directly distilled and recovered.

The determination of the chloromethylation reaction degree can be determined by an online test method: cutting a plurality of small strips, such as 10 samples of 5×10 cm, from any one of the single-sided sulfonated positive film roll obtained in step (5) in advance, dipping the samples in a constant-temperature reaction tank through a quick-connect sampling port (an upper part of the sample is hung by a polypropylene silk thread and the lower part is tied with a lead weight); taking out one piece every other 1 hour after the reaction starts for 6 hours, cutting the samples, placing the samples in a soxhlet extractor for extraction with acetone, washing clean the extract, drying the extract, precisely adding 0.4-0.5 g of the samples into a nickel-iron crucible, adding 1.5 g of mixed powder of sodium hydroxide and potassium nitrate, completely burning the mixture by an alcohol blast burner, dissolving the burnt mixture by 100 ml of hot water, and titrating the amount of chlorine ions by referring to the determination of exchange capacity of strong basic anion exchange resins in chloride form (GB/T 11992-2008) to obtain the chlorine content (mmol/g dry film). A relationship diagram between the chlorine content and the chloromethylation reaction time (h) is plotted as shown in FIG. 5. The analysis of the chlorine content should be completed within a relatively short time as much as possible, generally less than or equal to 60 min (depending on an operating proficiency degree of an analyst). Therefore, after the chlorine content reaches the maximum value (in practice, before the test result is obtained, the chloromethylation reaction is also continued), namely, after the chloromethylation reaction degree is determined to be complete, freeze water is introduced into a jacket of a super reaction tank immediately, the reaction solution is rapidly cooled, and the complete chloromethylation reaction process is completed, generally less than or equal to 15 hours. The maximum chlorine content depends on the absolute content of the crosslinked polystyrene component in the unreacted blank side of the single-sided sulfonated positive film. If the sulfonation degree is higher, the achieved maximum chlorine content is small. Conversely, if the sulfonation degree is lower, the left crosslinked polystyrene component in the unreacted blank side is more, and the achieved maximum chlorine content after the complete chloromethylation is higher. The maximum chlorine content should be in the range of 0.5-1.0 mmol/g dry film, corresponding to that the content of a quaternary amino group in an anion exchange layer after quaternization is 0.4-0.9 mmol/g dry film.

Step (7), performing a complete tertiary amination reaction: extracting out the chloromethylation reaction solution, injecting dichloroethane for washing for several times, and extracting out the dichloroethane; and injecting a mixed solution of dichloroethane and N-methylbutylamine, starting the pump to circulate the reaction solution in the kettle, and performing a tertiary amination reaction at a set temperature until the reaction is complete to obtain a tertiary aminated prefabricated bipolar film roll.

The chloromethylation reaction solution is strongly acidic, after the dichloroethane is used for washing for 2-3 times, if the reaction solution still cannot be close to be neutral, a small amount of liquid alkali can be slowly injected to adjust the pH to be neutral or slightly alkaline, and then the washing solution was pumped out. Then the tertiary amination reaction solution consisting of a mixed solution of dichloroethane and N-methylbutylamine is injected. The N-methylbutylamine can be recycled (supplemented when the N-methylbutylamine is insufficient) as long as the mass concentration of the N-methylbutylamine in the reaction solution is 5-20%. If the concentration is lower than 5%, the reaction is very slow, and a new reaction solution may need to be added after the reaction solution is extracted, namely, the tertiary amination reaction is performed again to achieve the required complete tertiary amination. However, if the concentration is higher than 20%, the reaction may be so fast that wrinkles appear on the film roll, and the amine odor is so heavy that the production conditions are deteriorated. The tertiary amination reaction is performed at a set temperature of 45-70°C. The reaction is too slow when the temperature is below 45°C, and the reaction solution is easy to be locally overheated and vaporized at a temperature above 70°C to form a non-uniform vapor-liquid reaction system. Therefore, the tertiary amination reaction is performed for 3-10 hours until the reaction can be completed.

The determination of the tertiary amination reaction degree can be determined by an online test method: cutting a plurality of small strips, such as 10 samples of 5×10 cm, from any one of the completely chloromethylated film roll obtained in step (6) in advance, dipping the samples in a constant-temperature reaction tank through a quick-connect sampling port (an upper part of the sample is hung by a polypropylene silk thread and a lower part is tied with a lead weight); taking out one piece every other 1 hour after the tertiary amination reaction starts for 3 hours, cutting the samples, placing the samples in a soxhlet extractor for extraction with methanol, washing clean the extract with deionized water, drying the extract, measuring the maximum regeneration capacity (only weakly basic groups at this time), i.e., the content of a tertiary amino group (mmol/dry film), referring to the determination for exchange capacity of anion exchange resins in hydroxylic form (GB/T 5760-2000). A relationship diagram between the content of a tertiary amino group and the tertiary amination reaction time (h) is plotted as shown in FIG. 6. Thus, when the content of the tertiary amino group is determined to reach 95% or more of the theoretical value (calculated according to formula 1, wherein C is the maximum chlorine content (mmol/g) which can be reached by the benzyl chloride group in step (6), N is the theoretical value

(mmol/g) of the content of the tertiary amino group, and 50.5 is the relative molecular weight increment of the benzyl methyl butyl amino group relative to the benzyl chloride group), the degree of the chloromethylation reaction can be determined to have been completed. Freeze water is immediately introduced into the jacket of the super reaction tank immediately, the reaction solution is rapidly cooled, and the complete tertiary amination reaction process is completed. The theoretical value range of th3e achievable content of a tertiary amino group is 0.49-0.95 mmol/g dry film, and calculated by the value range of the maximum chlorine content (0.5-1.0 mmol/g dry film).

$$N = C/(1+C\times 50.5\times 0.001) \qquad (1)$$

Step (8), performing an incomplete methylation reaction: extracting out the tertiary amination reaction solution, injecting dichloroethane for washing for several times, and extracting out the dichloroethane; and injecting a mixed solution of the dichloroethane and methyl iodide, starting the pump to circulate the reaction solution in the kettle, and performing a methylation reaction at a set temperature to a set reaction degree.

The extracted tertiary amination reaction solution can be temporarily stored, and can be recycled after the next batch of fresh dichloroethane or N-methylbutylamine is supplemented to maintain the concentration of N-methylbutylamine in the reaction solution. After 2-3 times of washing with dichloroethane, the residual N-methylbutylamine in the film roll can be washed completely. Then the mixed solution of the dichloroethane and methyl iodide is injected, the pump is started to circulate the reaction solution in the kettle to a set temperature, and the methylation reaction is started to gradually convert the weakly basic tertiary amino group from the surface to the inside into the strongly basic quaternary amino group. In the methylation reaction solution consisting of dichloroethane and methyl iodide, the mass concentration of the methyl iodide is 0.5-2%. If the mass concentration of the methyl iodide is too low, the reaction speed will be very slow and the amount of the methyl iodide relative to the tertiary amino group will be insufficient. If the mass percentage of the methyl iodide is higher than 2%, the methylation speed is very high, the reaction degree is difficult to control, the methylation reaction is easy to quickly to be completed, and an intermediate layer still retaining the water dissociation catalysis effect of the tertiary amino group cannot be generated. In practice, all tertiary amino groups in the film roll may be methylated to quaternary amino groups provided the reaction time is long enough and the methyl iodide with the amount slightly more than the theoretical molar equivalent (i.e., equivalent to the tertiary amino group content) is used. In view of this, the speed of the methylation reaction should be as slow as possible, the reaction temperature is preferably close to a room temperature, preferably 20-35°C, such that the methylation reaction time is 10-15 hours, which is beneficial to online analysis and detection and control of the reaction degree.

The tertiary amino group (benzyl methyl butyl amine) with the content of 0.03-0.1 mmol/g dry film, preferably 0.05-0.07 mmol/g dry film, needs to be reserved so as to form a water dissociation intermediate catalytic layer with a clear interface. The redundant tertiary amino groups are slowly methylated into quaternary amino groups (benzyl dimethyl butyl ammonium) with the content of 0.4-0.9 mmol/g dry film so as to form an anion exchange layer capable of resisting a strongly basic environment. It is clear that it is crucial to control the reaction degree of the incomplete methylation reaction well. Therefore, it is necessary to simultaneously examine changes of the residual amount of the weakly basic tertiary amino group and the generation amount of the strongly basic quaternary amino group along with the reaction time online.

The online test method of the residual amount of a tertiary amino group and the generation amount of a quaternary amino group may be as follows: after injecting dichloroethane to wash the film roll in the step, cutting a plurality of small strips, such as 10 samples of 5×10 cm, from any one of the completely tertiary aminated film roll, dropping the samples in a constant-temperature reaction tank through a quick-connect sampling port (an upper part of the sample is hung by a polypropylene silk thread and a lower part is tied with a lead weight); taking out one piece every other 1 hour after the methylation reaction starts for 5 hours, cutting the samples, placing the samples in a soxhlet extractor for extraction with methanol, washing clean the extract with deionized water, drying the extract, measuring the maximum regeneration capacity (weakly basic groups and strongly basic groups are contained at the same time) and the maximum regeneration capacity of strong type groups (namely the generation amount of a quaternary amino group) referring to the determination for exchange capacity of anion exchange resins in hydroxylic form (GB/T 5760-2000), wherein the content of the tertiary amino group (namely the residual amount of the tertiary amino group) is obtained by subtracting the two regeneration capacities. A relationship diagram showing changes between the residual amount of a tertiary amino group and the generation amount of a quaternary amino group along with the methylation reaction time (h) is plotted as shown in FIG. 7. Therefore, the time control node (the residual amount of a tertiary amino group is required to be 0.03-0.1 mmol/g dry film) of the incomplete methylation reaction degree can be determined from the relationship diagram, the reaction solution is immediately extracted, and the next operation link is continued.

Step (9), transforming a bipolar film: immediately extracting out the methylation reaction solution, injecting methanol for washing for several times, and injecting saline water for washing for several times; and opening a top cover of the reaction tank and integrally taking out the film roll and respectively winding after unwinding to obtain two of the

single piece-type bipolar film rolls with a mesh cloth support and a plastic separation mesh roll.

The extracted methylation reaction solution can be temporarily stored, and can be recycled after the next batch of fresh dichloroethane or methyl iodide is supplemented to maintain the concentration of methyl iodide in the reaction solution. After methanol is injected for washing for 2-3 times, the residual organic solvent in the film roll can be washed clean; the film roll is washed for several times using saline water (a sodium chloride dilute solution or a sodium sulfate dilute solution) with the mass concentration of 1-3%, and finally the film roll is dipped for more than 2 hours in one time so as to completely transform the positive side of the single piece-type bipolar film into a sodium type and the negative side into a chlorine type or a sulfuric acid type. A top cover of the reaction tank is opened and the transformed film roll is integrally taken out and respectively wound after unwound to obtain two single piece-type bipolar film rolls and a plastic separation mesh roll. In most cases, the plastic separation mesh roll does not react with the used reaction solution and does not swell and deform, particularly the separation mesh made of a polypropylene material, such that the plastic separation mesh can be recycled. The manufactured single piece-type bipolar film is suitable for wet storage and is stored in a special thickened plastic tube bag in a sealed manner after injection with saline water.

The performances of the prepared bipolar film are evaluated by detecting the following technical characteristics:

1) Wet film shrinkage rate (%): the mechanical strength of the single piece-type bipolar film is shown. If the wet film shrinkage rates in a length direction and a width direction are both less than 1.5%, the support effect of the mesh cloth is high and the film structure is compact. The detection method is as follows: the wet film is washed clean with deionized water and cut into a 200.0×100.0 mm rectangle, and the length ($L_0$), width ($W_0$), and thickness ($T_0$) are measured respectively. The length and the width are measured by a millimeter steel ruler with the accuracy of 0.1 mm. The thickness is measured by a micrometer with the accuracy of 0.001 mm. A certain mark point at a middle fixed position is taken to measure the thickness. Two film samples are dried in an air drying oven at about 80°C for 3 times, the length ($L_1$), width ($W_1$) and thickness (Ti) of the two dry films are then respectively measured, the length shrinkage rate L%, the width shrinkage rate W% and the thickness shrinkage rate T% are respectively calculated according to formulas 2-4. The arithmetic average values of the two samples are taken to obtain the wet film shrinkage rates.

$$L\% = (L_0-L_1)/L_0\times100\% \qquad (2)$$

$$W\% = (W_0-W_1)/W_0\times100\% \qquad (3)$$

$$T\% = (T_0-T_1)/T_0\times100\% \qquad (4)$$

2) Transmembrane voltage: the transmembrane voltage (U) of the bipolar film sample is measured at a current density of 100 mA/cm$^2$. The value of the transmembrane voltage is generally greater than 1.0 V. The smaller value represents the smaller energy consumption during the bipolar film electrodialysis application. The detection method is as follows: the utility model patent with the publication number of CN 2518105Y (named as a simple bipolar film current-voltage curve testing device) is utilized, the testing solution is a 0.5 mol/L sodium sulfate aqueous solution, and the testing temperature is 25°C.

3) Water dissociation efficiency: the water dissociation efficiency refers to the efficiency of dissociation of water molecules into hydrogen ions and hydroxides by directly applying a current. If the water dissociation efficiency is closer to 100%, the water dissociation catalytic efficiency is higher. The detection method is as follows: referring to the method disclosed in the Chinese patent with the application No. 201780022924.3 (specifically see paragraph [0116] in the description), a double-chamber organic glass assembly of a platinum electrode is arranged in each chamber, a bipolar film sample with an energizing area of 4.5 cm$^2$ is inserted into the middle of the assembly, 100 mL of a 1.0 mol/L sodium hydroxide aqueous solution is injected into an anode chamber, 100 mL of a 1.0 mol/L dilute hydrochloric acid solution is injected into a cathode chamber, the assembled assembly is integrally placed in a 25°C water bath at a constant temperature, and a 0.45 A direct current (i.e., a current density of 100 mA/cm$^2$) is introduced. After 20 hours, the amount of the sodium hydroxide remained in the anode chamber and the amount of the hydrochloric acid remained in the cathode chamber are respectively titrated, the current efficiency of generating hydroxides and hydrogen ions is respectively calculated by comparing the accumulated charges, and the arithmetic mean of the current efficiencies is taken as the water dissociation efficiency of the bipolar film.

4) Gluconic acid leakage rate: the compactness of the internal structure of the bipolar film can be measured. The

detection method is as follows: the double-chamber organic glass assembly is still used, 100 mL of a 1.0 mol/L sodium hydroxide aqueous solution is injected into an anode chamber, 100 mL of a 1.0 mol/L sodium gluconate aqueous solution is injected into a cathode chamber, the assembled assembly is integrally placed in a 25°C water bath at a constant temperature, after a 0.45 A direct current (current density of 100 $mA/cm^2$) is introduced for 1 hour, the amount of the gluconic acid permeating in the anode chamber is quantitatively analyzed, and the gluconic acid leakage rate is calculated by comparing the amount with the original total amount added in the cathode chamber.

5) Quaternary amino group stability: 10 bipolar film samples of 5×5 cm are dipped in a triangular flask containing 300 mL of a 2.5 mol/L sodium hydroxide aqueous solution, the samples are shaken for 10 days after placed in a water bath shaking table at a water bath temperature of 60°C, one piece is taken out every other 24 hours, the samples are cut, placed in a chromatographic column, washed clean with deionized water and dried, and the maximum regeneration capacity of strong type groups, namely the retained amount of the strongly basic quaternary amino group is measured by referring to the determination for exchange capacity of anion exchange resins in hydroxylic form (GB/T 5760-2000).

Example 1:

A manufacturing method for the single piece-type bipolar film roll with a mesh cloth support of the present example comprises the following steps:

Step (1), a dipping and absorbing film roll is prepared: an ultra-high molecular weight polyethylene mesh cloth with the trade mark of UE 100 (which is woven by melting and spinning ultra-high molecular weight polyethylene particles with a viscosity average molecular weight of 2.50 million, and has a wire diameter of 51 μm, the mesh number of 100 meshes, a mesh cloth thickness of 92 μm, a width of 55 cm and a length of 200 m) is selected, unwound at a constant speed of 4.2 m/min in a hot air bath at 125-130°C, and LLDPE powder (provided by Huangshan Banner Technology Co., Ltd. with a melting index of 42-47 g/10 min and a particle size range of 5-18 μm) is sprayed and applied at a spraying and applying speed of 110-120 g micropowder/min. The mesh cloth adhered and applied with the micropowder is inserted into a polyester protective film with a thickness of 0.125 mm at intervals, the film is wound at a constant tension, and the film roll is fixed using a cutting sleeve and heated in a blast oven at 125-130°C for 3 hours to complete a hot rolling process. The film roll is integrally taken out and naturally cooled in the air, the cutting sleeve is loosened, and the polyester film is stripped off to obtain a polyethylene film roll with a mesh cloth support. An average thickness of the obtained polyethylene film roll is about 0.12 mm and width and length are not increased. The polyethylene film roll is re-unwound, a polypropylene separation mesh is inserted, the film roll is loosely wound and integrally dipped into a stainless steel dipping and absorbing tank with a jacketed temperature control device containing a polymerization monomer solution (prepared by mixing 22.9 kg of styrene, 2.1 kg of a divinylbenzene industrial product (a purity of 63.2%) and 0.2 kg of benzoyl peroxide) at 53-55°C for 75 min. In order to make the dipping uniform, the polymerization monomer solution can be uninterruptedly extracted from a bottom part of the dipping and absorbing tank using a diaphragm pump, and then the polymerization monomer solution is returned to the tank through a top sprayer to circulate the monomer solution. After the dipping and absorbing are completed, the film roll is integrally taken out and unwound, the polypropylene separation mesh is stripped off, and the film is re-wound to obtain a dipping and absorbing film roll with an average thickness of about 0.16 mm and a width of less than 55.5 cm.

Step (2), a composite base film roll after dipping and absorbing is prepared: according to the operation method shown in FIG. 3, in a film-making clean workshop with a constant temperature (30°C) and a constant humidity (relative humidity of 50-60%), two of the same dipping and absorbing film rolls are unwound (obtained by parallel preparation according to step (1)), a polyester protective film roll (with a thickness of 0.10 mm and a width of 62 cm), the dipping and absorbing film roll, a polyimide spacing film roll (with a thickness of 0.05 mm and a width of 50 cm) and the dipping and absorbing film roll are unwound sequentially from top to bottom at the same time, winding and unwinding linear speeds are both adjusted to be 4.0 m/min until a tension is constant, and a combined winding is performed to obtain a composite base film roll after dipping and absorbing (A in FIG. 2). Finally, the polyester protective film is independently wound for 4 circles and the composite base film roll is integrally and tightly wrapped.

Step (3), a polymerized composite base film roll is prepared: the composite base film roll after dipping and absorbing is clamped tightly using two semi-cylindrical stainless steel clamps and integrally placed in a stainless steel tank body. Nitrogen is firstly introduced to replace air and then the internal nitrogen pressure is kept at 0.15 MPa. The stainless steel tank body is hoisted and integrally placed in a hot water tank with a circulating pump. A temperature sensor in the tank is linked to control a water bath temperature, a program is started for heating and heat preservation,

and a polymerization process is performed: prepolymerization at 65-68°C for 2 hours, polymerization at 75-78°C for 3 hours, and post-polymerization at 85-88°C for 12 hours so as to complete the polymerization. A nitrogen pressure is released, a tank cover is opened, integrally taking the clamp out of the tank, the clamp is integrally taken out of the tank and disassembled, the polyester protective film on the periphery of the composite film roll is firstly unwound, online unwinding and winding are performed, and the polyester protective film and the composite base film stripped from the polyester protective film are respectively wound to obtain the polymerized composite base film roll (B in FIG. 2) with two fused sides, the middle embedded with the spacing film, an average thickness about 0.36 mm, and a width less than 56 cm.

Step(4), a single-sided sulfonated composite positive film roll is prepared: a proportion of chlorosulfonic acid to concentrated sulfuric acid in a sulfonation tank is adjusted in advance (a mass concentration of industrial concentrated sulfuric acid is 97.5%, a purity of chlorosulfonic acid is greater than 98%, the mass ratio of the chlorosulfonic acid to the concentrated sulfuric acid is 1:1, and a sulfonation reaction solution has a volume of 3,850 L); and then hot water is introduced to a jacket to stably adjust the temperature of the sulfonation tank to enable a position 10 cm below a liquid level of the sulfonation reaction solution to be 40-42°C. 0.5 m of film roll is cut from the polymerized composite base film roll in advance and cut into 20 small sample pieces of 5×10 cm, an upper part of the sample is hung by a stainless steel wire, a lower part is perforated and tied with a lead weight, and the samples are simultaneously dipped in the sulfonation tank; one piece is taken out every other 5 min and quickly washed to be neutral using a large amount of deionized water; and the spacing film is stripped from the middle to obtain two small single-sided sulfonated sample films, the films are respectively cut, the cation exchange capacities (namely, the content of a sulfonic acid group) of the films are measured, an average value of the two cation exchange capacities is taken (a relative error is confirmed to be less than or equal to 10%), and a relationship diagram between the cation exchange capacity and a sulfonation degree, and sulfonation reaction time is obtained and shown in FIG. 4. Meanwhile, two small sample films stripped of a spacing film are also dipped in the sulfonation tank at the same time in advance, a double-sided sulfonation reaction is performed for 90 min under the same condition, and the cation exchange capacity is measured to be 2.1 mmol/g, namely the sulfonation degree at this time is defined to be 100%. According to the required reaction degree of 60-65%, the time of the single-sided sulfonation reaction to be performed (namely, the time of the composite base film roll staying in the sulfonation tank) is about 70 min read from FIG. 4 and linear speeds of unwinding and winding are calculated to about 0.57 m/min (a total sulfonation distance in the fixed sulfonation tank is 40 m by arranging and passing through a plurality of sets of reciprocating rollers). The polymerized composite base film roll is slowly unwound, the unwinding speed is controlled to be about 0.6 m/min, the film roll is dipped in the sulfonation tank, then the film roll is slowly dipped into four dilution tanks sequentially, wherein a mass concentration of sulfuric acid in the tanks is gradually decreased to be about 70%, 50%, 30% and 10%, respectively, and cooling water is introduced into a jacket and the temperature in the dilution tanks is controlled to less than or equal to 40°C all the time; then the film roll is dipped and passes through a rinsing bath, and clean water is continuously introduced, such that the concentration of sulfuric acid in the rinsing bath is always less than or equal to 2%; the film surface is blew dry online using a hot air blower at a hot air temperature of 70-80°C, and the air quantity is properly adjusted without obviously shaking the film surface; and finally, the film surfaces with two air-dried surfaces are continuously wound to obtain a single-sided sulfonated composite positive film roll (C in FIG. 2) and the spacing film is still embedded in the composite positive film roll. The whole single-sided sulfonation reaction process is continuously performed and about 6 hours are consumed from the unwinding to the winding.

Step (5), a positive film roll to be reacted with a blank side outward is prepared: the spacing film is firstly picked out from an edge of the single-sided sulfonated composite positive film roll using an operating knife, three film surfaces (two single-sided sulfonated positive films and a spacing film) are manually pulled out, then the composite positive film roll is unwound, and the films are wound in three rolls, that is, two single-sided sulfonated positive film rolls (an average thickness of 0.17 mm and a width less than 56.5 cm) and a spacing film roll can be easily obtained by online stripping and continuous winding. The two single-sided sulfonated positive film rolls are re-unwound. According to a winding direction, the sulfonation surfaces of the two rolls are enabled to be adhered together. Simultaneously, the polyethylene plastic separation mesh roll for electrodialysis (provided by Hangzhou Iontech Environmental Technology Co. Ltd., thickness of 1.5 mm, diamond-shaped holes, and hole side length of 5 mm) is inserted at a bottom part and then loosely wound on a polytetrafluoroethylene roller with porous baffle plates on both sides (an outer diameter of the roller is 40 cm) to obtain a positive film roll to be reacted with a blank side outward (D in FIG. 2), an outer diameter of the wound film roll is about 95 cm, and the film roll is bound by a polypropylene plastic rope.

Step (6), a complete chloromethylation reaction is performed: the whole roller is hoisted and placed on a bottom sieve plate of a titanium alloy reaction tank (an inner diameter of 1.0 m and an effective volume of 1,000 L), the tank is covered, and a top cover and a tank body are fastened using a quick-connect wrench; and a corrosion-resistant

diaphragm pump is connected between a top inlet (with four "shower head" type sprayers) and a bottom outlet. At the same time, 0.3 m of film roll is cut from the single-sided sulfonated positive film roll obtained in step (5) and cut into 10 small sample strips of 5×10 cm. An upper part of the sample is hung and fixed using a polypropylene silk thread, a lower part is tied with a lead weight, and the sample is dropped into the reaction tank through a quick-connection sampling port. 600 L of fresh industrial chloromethyl ether is firstly injected, the film roll and the small sample strips haven been completely submerged, which is confirmed by observation by a sight glass, and a diaphragm pump is started to ensure that the solution in the tank always circularly flows, which is firstly stabilized for 90 min; then 20 L of anhydrous tin chloride is continuously injected by a plunger pump and the injection is completed within 20 min; and hot water is introduced into the jacket of the reaction tank to raise the temperature of the reaction solution in the tank to 35-38°C. After 6 hours of the constant temperature reaction, a piece of a small sample strip is taken out from a quick sampling port every other 1 hour, cut, and placed in a soxhlet extractor to be extracted with acetone, an extract is washed clean and dried immediately, and the chlorine content is determined. A relationship diagram between the chlorine content and the chloromethylation reaction time is plotted as shown in FIG. 5. It can be known from the change trend of the figure that: the reaction time for the complete chloromethylation needs at least 13 hours to reach the maximum chlorine content (about 0.8 mmol/g dry film). To ensure the completion of the chloromethylation reaction, the chloromethylation reaction time is prolonged to 15 hours in the example; and then cooling water is immediately introduced into the jacket to rapidly reduce the temperature of the reaction solution in the kettle to be below 25°C, and the complete chloromethylation reaction is completed.

Step (7), a complete tertiary amination reaction is performed: all chloromethylation reaction solution is extracted from the bottom part of the reaction kettle and the extracted solution is transferred into a chloromethyl ether distillation system. 500 L of dichloroethane is injected, a diaphragm pump is started to circulate, and the film roll is washed for 1 hour; the washing is performed for three times, wherein 10 L of a sodium hydroxide aqueous solution with a mass concentration of 10% is injected during the 3rd washing, and the pH is adjusted to be weakly basic; and each time extracted washing liquor is all transferred into a dichloroethane recovery system. Meanwhile, 0.3 m of the roll film is cut from the completely chloromethylated film roll obtained in step (6) in advance and cut into 10 small sample strips of 5×10 cm. An upper part of the sample is hung and fixed by a polypropylene silk thread, a lower part of the sample is tied with a lead weight, and the sample is dropped into the reaction tank through a quick-connection sampling port. 600 L of a mixed solution of dichloroethane and N-methylbutylamine is injected, wherein a mass concentration of the N-methylbutylamine is 15%, and a diaphragm pump is started to ensure that the reaction solution in the kettle always circularly flows, which is firstly stabilized at a room temperature for 1 hour. Hot water is introduced into the jacket to raise a temperature in the tank to 58-62°C; and after 3 hours of the tertiary amination reaction, a piece of a small sample strip is taken out from a quick sampling port every other 1 hour, cut, and placed in a soxhlet extractor to be extracted with methanol, an extract is washed clean with deionized water and dried, and the maximum regeneration capacity, namely the content of a tertiary amino group, is measured. A relationship diagram between the content of a tertiary amino group and the tertiary amination reaction time is plotted as shown in FIG. 6. The theoretical value of the content of the tertiary amino group calculated by the formula 1 is 0.77 mmol/g (the maximum chlorine content is 0.8 mmol/g). It is determined from the figure: the complete tertiary amination reaction time requires at least 8 hours (the content of the tertiary amino group is greater than or equal to 0.77×95% = 0.73). To ensure the completion of the tertiary amination reaction, the tertiary amination reaction time is 9.5 hours; then cooling water is immediately introduced into the jacket to rapidly reduce the temperature of the reaction solution in the kettle to be below 30°C, and the complete chloromethylation reaction is completed to obtain a tertiary aminated prefabricated bipolar film roll (shown in E in FIG. 2).

Step (8), an incomplete methylation reaction is performed: all tertiary amination reaction solution is extracted from the bottom part of the reaction kettle and the extract is temporarily stored and recycled for a next batch. 500 L of dichloroethane is injected, a diaphragm pump is started to circulate, and the film roll is washed for 1 hour; the washing is performed for least three times until residual amine in washing liquor is less than 1% detected by a gas chromatography; and each time extracted washing liquor is all transferred into a dichloroethane recovery system. Meanwhile, 0.3 m of the film roll is cut from the completely tertiary aminated prefabricated bipolar film roll obtained in step (7) in advance and cut into 10 small sample strips of 5×10 cm. An upper part of the sample is hung and fixed by a polypropylene silk thread, a lower part of the sample is tied with a lead weight, and the sample is dropped into the reaction tank through a quick-connection sampling port. 600 L of a mixed solution of dichloroethane and methyl iodide is injected, wherein a mass concentration of the methyl iodide is 1.8%, and a diaphragm pump is started to ensure that the reaction solution in the kettle always circularly flows, which is firstly stabilized at a room temperature for 30 min. Hot water is introduced into the jacket to raise a temperature in the tank to 30-32°C; and after 5 hours of the methylation reaction, a piece of a small sample strip is taken out from a quick sampling port every other 1 hour, cut, and placed in a soxhlet extractor to be extracted with methanol, an extract is washed clean

with deionized water and dried, and the maximum regeneration capacity and the maximum regeneration capacity of strong type groups (namely the generation amount of a quaternary amino group) are measured, wherein the content of the tertiary amino group (namely the residual amount of the tertiary amino group) is obtained by subtracting the two regeneration capacities. A relationship diagram showing changes between the residual amount of a tertiary amino group and the generation amount of a quaternary amino group along with the methylation reaction time is plotted as shown in FIG. 7. It is pre-deduced from the change trend of the figure: the time node of the incomplete methylation reaction is about 11 hours (the determination basis is that the residual amount of the tertiary amino group is 0.03-0.1 mmol/g dry film). At this point, the reaction solution is immediately extracted; and the extracted reaction solution is temporarily stored and reused in a next batch.

Step (9), a bipolar film is transformed: 500 L of methanol is immediately injected, a diaphragm pump is started to circulate, and the film roll is washed for 1 hour; and the washing is performed for three times and each time extracted washing liquor is all transferred into a methanol recovery system. 500 L of 2% sodium sulfate aqueous solution is then injected to wash for three times and after the 3rd washing is finished, the film roll is dipped for 2 hours to ensure that the bipolar film is fully transformed (the cation exchange layer is transformed into a sodium type and the anion exchange layer is transformed into a sulfate type). A top cover of the reaction tank is opened, the wet film roll is integrally taken out and respectively wound after unwound, and a plastic separation mesh is stripped to obtain two single piece-type bipolar film rolls. It is found that the width and the thickness of the film rolls are slightly increased. The film rolls have an average thickness of 0.21 mm and a width of 57.5-58.5 cm, and are suitable for being loaded into an electrodialysis unit with a specification of 560×1,120 mm or 500×1,500 mm after edge cutting.

Random sampling is performed. Technical characteristics of the prepared single piece-type bipolar film roll product are analyzed and detected, and shown in Table 2.

Example 2

A manufacturing method for the single piece-type bipolar film roll with a mesh cloth support of the present example comprises the following steps:

Step (1), a dipping and absorbing film roll is prepared, step (2), a composite base film roll after dipping and absorbing is prepared, and step (3), a polymerized composite base film roll is prepared: the used raw materials and proportions thereof, and the specific embodiment are consistent with those in example 1.

Step (4), a single-sided sulfonated composite positive film roll is prepared: an unwinding speed of the polymerized composite base film roll is reduced from 0.6 m/min to 0.5 m/min, retention time of the film roll in a sulfonation tank is increased from 70 min to 80 min, a sulfonation reaction degree is adjusted from 60-65% to 75-80%, and the raw materials and proportions thereof, and the remaining specific embodiment are consistent with those in example 1.

Step (5), a positive film roll to be reacted with a blank side outward is prepared: the embodiment is consistent with that in example 1.

Step (6), a complete chloromethylation reaction is performed: chloromethylation reaction time is set to 11 hours and the maximum chlorine content (about 0.54 mmol/g dry film) is reached, and the raw materials and proportions thereof, and the remaining specific embodiment are consistent with those in example 1.

Step (7), a complete tertiary amination reaction is performed: tertiary amination reaction time is set to 9 hours and the content of a tertiary amino group is measured to be 0.47 mmol/g dry film, and the raw materials and proportions thereof, and the remaining specific embodiment are consistent with those in example 1.

Step (8), an incomplete methylation reaction is performed: methylation reaction time is set to 10 hours and the residual amount of the tertiary amino group is measured to be 0.05 mmol/g dry film, and the raw materials and proportions thereof, and the remaining specific embodiment are consistent with those in example 1.

Step (9), a bipolar film is transformed: the raw materials and proportions thereof and the specific embodiment are consistent with those in example 1. Two single piece-type bipolar film rolls are obtained with an average thickness of 0.22 mm and a width of 58-58.7 cm.

Random sampling is performed. Technical characteristics of the prepared single piece-type bipolar film roll

product are analyzed and detected, and shown in Table 2.

Example 3

A manufacturing method for the single piece-type bipolar film roll with a mesh cloth support of the present example comprises the following steps:

Step (1), a dipping and absorbing film roll is prepared: the operation method in example 1 of the patent with the publication No. CN 108752681B is referred: an ultra-high molecular weight polyethylene mesh cloth with the trade mark of UE 180 (which is woven by melting and spinning ultra-high molecular weight polyethylene particles with a viscosity average molecular weight of 1.50 million, and has a wire diameter of 42 μm, the mesh number of 180 meshes, a mesh cloth thickness of 73 μm, a width of 55 cm and a length of 200 m) is selected, unwound at a constant speed of 3.5 m/min in a hot air bath at 120-125°C, and LLDPE powder (with a melting index of 28-35 g/10 min and a particle size range of 2-13 μm) is sprayed and applied at a spraying and applying speed of 110-120 g micropowder/min. The mesh cloth adhered and applied with the micropowder is inserted into a polyester film at intervals, the film is wound at a constant tension, and the film roll is fixed using a cutting sleeve and heated in a blast oven at 120-125°C for 3 hours to complete a hot rolling process. The film roll is integrally taken out and naturally cooled in the air, the cutting sleeve is loosened, and the polyester film is stripped off to obtain a polyethylene film roll with a mesh cloth support. An average thickness of the obtained polyethylene film roll is about 0.09 mm and width and length are not increased. The polyethylene film roll is re-unwound, a polypropylene separation mesh is inserted, the film roll is loosely wound and integrally dipped into a stainless steel dipping and absorbing tank containing a polymerization monomer solution (prepared by mixing 21.9 kg of styrene, 3.1 kg of a divinylbenzene industrial product and 0.2 kg of benzoyl peroxide) at 45-48°C for 2 hours. After the dipping and absorbing are completed, the film roll is integrally taken out and unwound, the polypropylene separation mesh is stripped off, and the film is re-wound to obtain a dipping and absorbing film roll with an average thickness of about 0.13 mm and a width of less than 55.4 cm.

Step (2), a composite base film roll after dipping and absorbing is prepared: according to the operation method shown in FIG. 3, in a film-making clean workshop, two of the same dipping and absorbing film rolls are unwound, a polyester protective film roll (with a thickness of 0.125 mm and a width of 63 cm), the dipping and absorbing film roll, a polyvinylidene fluoride spacing film roll (with a thickness of 0.05 mm and a width of 50 cm) and the dipping and absorbing film roll are unwound sequentially from top to bottom at the same time, winding and unwinding linear speeds are both adjusted to be 4.0 m/min until a tension is constant, and a combined winding is performed to obtain a composite base film roll after dipping and absorbing.

Step (3), a polymerized composite base film roll is prepared: the composite base film roll after dipping and absorbing is clamped tightly using a stainless steel clamp and integrally placed in a stainless steel tank body, and then an internal nitrogen pressure is kept at 0.15 MPa. The stainless steel tank body is integrally placed in a hot water tank and programmed heating and heat preservation are started: prepolymerization at 65°C for 3 hours, polymerization at 75°C for 2 hours, and post-polymerization at 90°C for 12 hours. The clamp is integrally taken out of the tank, the polyester protective film is unwound, online unwinding and winding are performed, and the polymerized composite base film roll with two fused sides, the middle embedded with the spacing film, an average thickness about 0.30 mm, and a width less than 56 cm is obtained.

Step(4), a single-sided sulfonated composite positive film roll is prepared: a proportion of a sulfonation reaction solution is adjusted (a concentration of concentrated sulfuric acid is 98.2% and a mass ratio of industrial chlorosulfonic acid to the concentrated sulfuric acid is 1: 1.2); and then hot water is introduced to a jacket to adjust the temperature of the sulfonation reaction solution to be 38-41°C. The polymerized composite base film roll is slowly unwound at a speed of about 0.7 m/min and dipped into the sulfonation tank, and the film roll sequentially passes through four dilution tanks (with concentrations of 65%, 40%, 20%, and 8% respectively), then passes through a water washing tank, and timely washed clean. A film surface is dried online by using hot air at 70-80°C and the film is continuously wound to obtain a single-sided sulfonated composite positive film roll with a slightly increased thickness and a basically unchanged width. Before that, according to the method in step (4) of example 1, a small sample piece is cut and a single-sided sulfonation reaction is performed to obtain a relationship diagram showing changes of a sulfonation degree along with sulfonation time (similar to FIG. 4). At the same time, a double-sided sulfonation is further performed to obtain the maximum cation exchange capacity of 1.79 mmol/g (the sulfonation degree at this time is defined as 100%). It is deduced from this that the required sulfonation degree is about 65%, the sulfonation time is 55-60 min, and an unwinding speed is calculated to be about 0.7 m/min.

Step (5), a positive film roll to be reacted with a blank side outward is prepared: the single-sided sulfonated composite positive film roll is unwound and stripped off online, and the films are wound into three rolls to obtain two single-sided sulfonated positive film rolls (an average thickness of 0.15 mm and a width less than 56.5 cm) and a spacing film roll. The sulfonation surfaces of the two positive film rolls are adhered together and re-unwound. Simultaneously, a plastic separation mesh roll for electrodialysis (having a specification consistent with that in example 1) is inserted at a bottom part. The films are loosely wound together on a polytetrafluoroethylene roller with porous baffle plates on both sides to obtain a positive film roll to be reacted with a blank side outward. An outer diameter of the wound film roll is about 92 cm and the film roll is bound by a plastic rope.

Step (6), a complete chloromethylation reaction is performed: the roller is integrally placed in a titanium alloy reaction tank, 600 L of industrial chloromethyl ether is injected to completely submerge the film roll, a diaphragm pump is started to enable the solution in the tank to circularly flow, which is firstly stabilized for 60 min, and then 15 L of anhydrous tin chloride is injected; and a temperature of the reaction solution in the kettle is heated to 36-40°C, cooling water is immediately introduced into a jacket after 12 hours of a reaction to rapidly reduce the temperature of the reaction solution in the kettle to below 25°C to complete the complete chloromethylation reaction. Before that, according to the method in step (6) of example 1, a small sample strip is arranged and changes of the chlorine content along with the chloromethylation reaction are analyzed by sampling to plot a relationship diagram similar to FIG. 5. It can be known from the change trend of the figure that: the complete chloromethylation reaction time needs at least 11 hours to reach the maximum chlorine content (about 0.74 mmol/g dry film).

Step (7), a complete tertiary amination reaction is performed: the film roll is first washed clean according to the method in step (7) of example 1, then 600 L of a mixed solution of dichloroethane and N-methylbutylamine (a mass concentration of the N-methylbutylamine is 12%) is injected, and a diaphragm pump is started, which is firstly stabilized at a room temperature for 1 hour. The temperature in the tank is raised to 55-58°C and a reaction is performed for 9 hours; and then cooling water is immediately introduced into a jacket to rapidly reduce a temperature of a reaction solution in a kettle to be below 30°C and the complete tertiary amination reaction is completed. Before that, according to the method in step (7) of example 1, a small sample strip is arranged and changes of the content of a tertiary amino group along with the tertiary amination reaction are analyzed by sampling to plot a relationship diagram similar to FIG. 6. It can be known from the change trend of the figure that: the complete tertiary amination reaction time needs 7-8 hours (the content of the tertiary amino group is more than or equal to $0.71 \times 95\% = 0.67$).

Step (8), an incomplete methylation reaction is performed: the film roll is first washed clean according to the method in step (8) of example 1, then 600 L of a mixed solution of dichloroethane and methyl iodide (a mass concentration of the methyl iodide is 1.5%) is injected, and a diaphragm pump is started, which is firstly stabilized at a room temperature for 30 min. The temperature in the tank is raised to 30-32°C and a reaction is performed for 10 hours; and then a reaction solution is immediately extracted. Before that, according to the method in step (8) of example 1, a small sample strip is arranged and changes of the residual amount of a tertiary amino group and the generation amount of a quaternary amino group along with the methylation reaction time are analyzed by sampling to plot a relationship diagram similar to FIG. 7. It can be known from the change trend of the figure that: the incomplete methylation reaction time node is about 10 hours.

Step (9), a bipolar film is transformed: the step is performed according to the method in example 1. Two single piece-type bipolar film rolls are obtained with an average thickness of 0.17 mm and a width less than or equal to 58 cm.

Random sampling is performed. Technical characteristics of the prepared single piece-type bipolar film roll product are analyzed and detected, and shown in Table 2.

**Comparative example 1**

The comparative example differs from example 1 in that:
10 pieces of $5 \times 5$ cm sample blocks are cut from the completely chloromethylated film roll obtained in step (6) of example 1 and tied with a lead weight. A plastic separation mesh ($8 \times 8$ cm, material and thickness are consistent with those in example 1) for electrodialysis is inserted between each two blocks. The sample blocks are completely dipped in a stoppered flask containing 300 ml of a mixed amination reaction solution (containing 6% dimethylamine and 30% trimethylamine) referring to the amination condition in example 3 of the patent with the publication No. CN102061004B (see paragraph [0038]), placed on a constant-temperature shaking bed, and subjected to an amination reaction at about 35°C for 10 hours. A film piece is taken out and rinsed clean with clean water until the film piece is free from an amine smell; and then the film piece is rinsed with a 2% sodium sulfate aqueous solution for three times and finally dipped

once overnight to complete transformation to prepare a single piece-type bipolar film with a mesh cloth support and a tertiary amino group (benzyldimethylamine) and a quaternary amino group (benzyltrimethylammonium) uniformly distributed in the whole anion exchange layer.

Technical characteristics are measured separately and an arithmetic mean of the conforming samples is taken and shown in Table 2. It can be known that compared with the example, the prepared single piece-type bipolar film has a relatively high transmembrane voltage, lower water dissociation efficiency, and obviously poorer stability of the quaternary amino group in an alkali solution.

Comparative example 2

Based on the dipping method of the patent with the publication No. CN 102061004 B and combining the single-sided sulfonation method of the present disclosure, the present comparative example prepares a single piece-type bipolar film without a mesh cloth support. A specific implementation method is as follows:

Step (1): a dipping and absorbing film is prepared: LLDPE powder (with a specification consistent with that of example 1) is tape-cast and extruded to obtain a polyethylene film with a thickness of 0.13 mm; the film is cut into square blocks of 10× 10 cm, a polypropylene separation mesh is inserted at intervals, the square blocks and the polypropylene separation meshes are loosely overlapped, wholly dipped into 300 ml of a polymerization monomer solution (a proportion is consistent with that of example 1) at 53-55°C for 75 min; and the overlapped square blocks and polypropylene separation meshes are taken out, the polypropylene separation meshes are stripped off, the polymerization solution on the surfaces of the square blocks are sucked dry using filter one by one to obtain a dipping and absorbing film with an average thickness of about 0.16 mm and a side length increased to be more than 10.5 cm.

Step (2), a composite base film after dipping and absorbing is prepared: 6 polyester protective films (a square with a thickness of 0.125 mm and a side length of 15 cm) and 5 polyimide spacing films (a square with a thickness of 0.05 mm and a side length of 7 cm) are prepared, and the polyester protective film, the dipping and absorbing film, the polyimide spacing film and the dipping and absorbing film are sequentially overlapped from top to bottom (a total of five times of overlapping is performed, a central position is consistent, and a side length is parallel), so as to obtain the composite base film after dipping and absorbing.

Step (3), a polymerized composite base film roll is prepared: the composite base film after dipping and absorbing is clamped tightly using two smooth stainless steel plates (a square with a thickness of 20 mm and a side length of 20 cm), the peripheries of the stainless steel plates are fastened by screws, the whole is placed in a drying oven under a nitrogen protection, and a polymerization process is implemented: prepolymerization at 65-68°C for 2 hours, polymerization at 75-78°C for 3 hours, and post-polymerization at 85-88°C for 12 hours. The whole is taken out, the steel plates are disassembled, the polyester protective films are stripped off one by one to obtain 5 polymerized composite base films with peripheries fused together, a middle embedded with the spacing film, and an average thickness of about 0.35 mm.

Step (4), a single-sided sulfonated composite positive film: the polymerized composite base film sample is tied with a lead weight, each piece of the sample is separated by a polytetrafluoroethylene mesh, the sample is completely dipped in a glass reactor containing 500 ml of a sulfonation reaction solution (a composition and a proportion are consistent with those example 1), circulating hot water is introduced to a jacket to raise a temperature of the reaction solution in the tank to 40-42°C, and a single-sided sulfonation reaction is performed for 100 min.
The sample is taken out and sequentially dipped with a dilute sulfuric acid solution of 70%, 50%, 30%, and 10%, and the dipped sample is rinsed clean with clean water and dried in a blast oven to obtain the single-sided sulfonated composite positive film sample.

Step (5), a positive film to be reacted with a blank side outward is prepared: the spacing film is picked out from an edge of the single-sided sulfonated composite positive film sample using a scalpel, the film sample is manually pulled apart to obtain the single-sided sulfonated positive films (10 in total) and the spacing films (5 in total), then the sulfonated surfaces of the two single-sided sulfonated positive films are adhered together, a plastic spacing mesh (15×15 cm, a material and thickness are consistent with those of example 1) for electrodialysis is inserted, the positive films and the plastic spacing meshes are loosely overlapped to obtain a positive film stack to be reacted with a blank side outward (containing 6 plastic spacing meshes and 10 single-sided sulfonated positive films), and the film stack is bound by a plastic rope.

Step (6), a complete chloromethylation reaction is performed: the bound film stack is placed into a glass reaction

kettle, 500 L of industrial chloromethyl ether is injected, and the film stack is firstly dipped for 1 hour; then 20 mL of anhydrous tin chloride is added dropwise, circulating hot water is introduced into a jacket to raise a temperature of a reaction solution in the tank to 35-38°C, and the chloromethylation reaction is performed for 13 hours to reach the maximum chlorine content (about 0.84 mmol/g dry film).

Step (7), a mixed amination reaction is performed: all the chloromethylation reaction solution is extracted from a bottom part of the glass reactor, 400 mL of dichloroethane is injected for washing four times; and then 500 mL of a mixed amination reaction solution (containing 6% dimethylamine and 30% trimethylamine) is injected and an amination reaction is performed at 35°C for 10 hours.

Step (8), transformation is performed: all the amination solution is extracted from the bottom part of the glass reactor and clean water is injected for washing for several times until no amine smell exists; and then the film is washed three times using 400 mL of a 2% sodium sulfate aqueous solution and finally dipped once overnight to prepare a single piece-type bipolar film without a mesh cloth support and a tertiary amino group (benzyldimethylamine) and a quaternary amino group (benzyltrimethylammonium) uniformly distributed in the whole anion exchange layer.

Technical characteristics are measured separately and an arithmetic mean of the conforming samples is taken and shown in Table 2. It can be known that compared with the example, the prepared single piece-type bipolar film in the present comparative example has a reduced water dissociation efficiency, an obviously poorer stability of the quaternary amino group in an alkali solution, and an obviously larger wet film shrinkage rate and glucose leakage rate.

**Table 2 Technical characteristics of bipolar film products and samples**

| Bipolar film samples | **Example 1** | **Example 2** | **Example 3** | **Comparative example 1** | **Comparative example 2** |
|---|---|---|---|---|---|
| Wet film thickness (mm) | 0.21 | 0.22 | 0.17 | 0.22 | 0.20 |
| Content of sulfonic acid group (mmol/g dry film) | 1.32 | 1.59 | 1.15 | 1.32 | 1.30 |
| Content of quaternary amino group (mmol/g dry film) | 0.65 | 0.41 | 0.51 | 0.64 | 0.66 |
| Content of tertiary amino group (mmol/g dry film) | 0.06 | 0.05 | 0.05 | 0.08 | 0.09 |
| Wet film shrinkage rate (L%×W%×T%) | 1.1×0.9×18.3 | 1.0×1.1×17.3 | 0.9×0.8×15.6 | 1.2×1.1×16.5 | 7.8×8.7×10.4 |
| Transmembrane voltage U (V) | 1.18 | 1.12 | 1.08 | 1.26 | 1.14 |
| Water dissociation efficiency (%) | 99.2 | 99.5 | 99.1 | 97.6 | 96.2 |
| Gluconic acid leakage rate (%) | 0.41 | 0.52 | 0.63 | 0.55 | 4.8 |
| Stability time of quaternary amino group (days) | >8 | >8 | >6 | < 2 | < 2 |

(continued)

| Bipolar film samples | **Example 1** | **Example 2** | **Example 3** | **Comparative example 1** | **Comparative example 2** |
|---|---|---|---|---|---|
| Loss rate of quaternary amino group (%) | 5.4 | 6.3 | 5.7 | 15.6 | 16.4 |
| Note: 1) comparative example 1 is a single piece-type bipolar film roll with a mesh cloth support, comparative example 2 is single piece-type bipolar film roll without a mesh cloth support, and both have a water dissociation catalytic group of benzyldimethylamine (a tertiary amino group) uniformly distributed in a whole anion exchange layer; 2) a quaternary amino group of comparative examples 1 and 2 is benzyltrimethylammonium and a quaternary amino group of examples 1-4 are benzyldimethylbutylammonium; 3) a transmembrane voltage, water dissociation efficiency and gluconic acid leakage rate are all measured when a current density is 100 mA/cm$^2$; and 4) quaternary amino group stabilization time refers to the longest time that a loss rate of a quaternary amino group is less than 5% and the loss rate of a quaternary amino group is a result of comparison with the initial retained amount after 10 days of dipping. | | | | | |

As shown in FIG. 8, a relationship diagram showing changes of the retained amount of a quaternary amino group (mmol/g dry film) along with alkali solution soaking time (day) is plotted. It can be obtained from the figure that the longest time when the loss rate of a quaternary amino group is less than 5% is used as the quaternary amino group stabilization time; then the loss rate (%) of a quaternary amino group after dipping for 10 days (240 h) compared with the initial retained amount; and the stability of the quaternary amino group in the anion exchange layer of the bipolar film in these two aspects are compared and analyzed. It can be seen that the stability of the quaternary amino group of the above examples 1-3 is significantly better than that of comparative examples 1 and 2.

The above is only a detailed description of the preferred examples and principles of the present disclosure. A person of ordinary skill in the art will make changes in the specific implementation according to the ideas provided by the present disclosure. These changes should also be considered as the protection scope of the present disclosure.

## Claims

1. A single piece-type bipolar film roll with a mesh cloth support, wherein a crosslinked polystyrene-low molecular weight polyethylene composite base film roll with an ultra-high molecular weight polyethylene mesh cloth as a support is used as a base body, one side is a cation exchange layer formed by a sulfonated crosslinked polystyrene-low molecular weight polyethylene composite, the other side is an anion exchange layer formed by a quaternized crosslinked polystyrene-low molecular weight polyethylene composite, and a water dissociation catalyst layer formed by a tertiary aminated crosslinked polystyrene-low molecular weight polyethylene composite is arranged between the two sides.

2. The single piece-type bipolar film roll with a mesh cloth support according to claim 1, wherein the content of a benzenesulfonic acid group in the cation exchange layer is 1.0-1.8 mmol/g dry film, the content of a quaternary amino group in the anion exchange layer is 0.4-0.9 mmol/g dry film, and the content of a tertiary amino group in the water dissociation catalyst layer is 0.03-0.1 mmol/g dry film, wherein the quaternary amino group in the anion exchange layer is benzyl dimethyl butyl ammonium and the tertiary amino group in the water dissociation catalyst layer is benzyl methyl butyl amine.

3. The single piece-type bipolar film roll with a mesh cloth support according to claim 1, wherein the single piece-type bipolar film roll has a wet film thickness of 0.15-0.4 mm in pure water.

4. The single piece-type bipolar film roll with a mesh cloth support according to claim 1, wherein the crosslinked polystyrene-low molecular weight polyethylene composite base film roll with an ultra-high molecular weight polyethylene mesh cloth as a support is prepared by using an ultra-high molecular weight polyethylene mesh cloth as a support, thermally spraying and applying low molecular weight polyethylene powder, soaking and dipping a polymerization monomer solution containing styrene and divinylbenzene, and performing polymerization to obtain a polymer network structure interpenetrated with a crosslinked polystyrene component and a linear polyethylene component.

5. A manufacturing method for the single piece-type bipolar film roll according to any of claims 1-4, comprising the

following steps:

(1) preparing a dipping and absorbing film roll

using an ultra-high molecular weight polyethylene mesh cloth as a support, thermally spraying and applying low molecular weight polyethylene micro powder, covering a protective film, performing winding, performing pressurizing and preserving heat for a target time, and stripping the protective film after completing a hot rolling process to obtain a polyethylene film roll with a mesh cloth support; and
dipping the polyethylene film roll into a polymerization monomer solution containing styrene, divinyl benzene and an initiator for dipping and absorbing, and performing winding to obtain a dipping and absorbing film roll after completing the dipping and absorbing;

(2) preparing a composite base film roll after dipping and absorbing
sequentially unwinding a protective film roll, the dipping and absorbing film roll, a spacing film roll and another dipping and absorbing film roll from top to bottom at the same time, and performing combined winding to obtain a composite base film roll after dipping and absorbing, wherein a width of the protective film roll is greater than that of the dipping and absorbing film roll, such that two sides of the protective film roll in the composite base film roll respectively extend out of two sides of the dipping and absorbing film roll; and a width of the spacing film roll is less than that of the dipping and absorbing film roll, such that two sides of the spacing film roll in the composite base film roll are respectively positioned within two sides of the dipping and absorbing film roll;
(3) preparing a polymerized composite base film roll
placing the composite base film roll after dipping and absorbing in a nitrogen atmosphere for polymerization, and stripping the protective film after completing the polymerization to obtain a polymerized composite base film roll;
(4) preparing a single-sided sulfonated composite positive film roll
unwinding the polymerized composite base film roll, dipping the film into a sulfonation tank containing chlorosulfonic acid and concentrated sulfuric acid, performing sulfonation reaction at a constant temperature, sequentially passing the film through a plurality of dilution tanks containing sulfuric acid with different concentrations, then dipping the film into a water washing tank for washing clean, online blow-drying the film using a hot air blower, and continuously winding the film to obtain a single-sided sulfonated composite positive film roll;
(5) preparing a positive film roll to be reacted with a blank side outward

unwinding the single-sided sulfonated composite positive film roll, striping off the film online, taking out the spacing film, and winding the film to obtain two single-sided sulfonated positive film rolls; and
unwinding the rolls by sticking sulfonated sides of the two single-sided sulfonated positive film rolls together, at the same time inserting a plastic separation mesh roll during the unwinding, and performing winding to obtain a positive film roll to be reacted with a blank side outward;

(6) performing a complete chloromethylation reaction
placing the positive film roll to be reacted with a blank side outward into a reaction tank with a top fluid distributor and a bottom sieve plate, connecting a top inlet and a bottom outlet to a pump body, injecting a chloromethylation reaction solution, starting the pump body to circulate the reaction solution in the reaction tank, and performing a chloromethylation reaction at a set temperature until the reaction is complete;
(7) performing a complete tertiary amination reaction

extracting out the chloromethylation reaction solution, injecting dichloroethane for washing for several times, and extracting out the dichloroethane; and
injecting a tertiary amination reaction solution, starting the pump body to circulate the reaction solution in the reaction tank, and performing a tertiary amination reaction at a set temperature until the reaction is complete;

(8) performing an incomplete methylation reaction

extracting out the tertiary amination reaction solution, injecting dichloroethane for washing for several times, and extracting out the dichloroethane; and
injecting a methylation reaction solution, starting the pump body to circulate the reaction solution in the reaction tank, and performing a methylation reaction at a set temperature to a set reaction degree; and

(9) transforming a bipolar film

immediately extracting out the methylation reaction solution, injecting methanol for washing for several times, and injecting saline water for washing for several times; and

integrally taking out the film roll and respectively winding after unwinding to obtain two single piece-type bipolar film rolls.

**6.** The manufacturing method according to claim 5, wherein in step (2), the protective film roll is made of polyester, has a thickness of 0.05-0.15 mm, and has a width 2-10 cm greater than that of the dipping and absorbing film roll.

**7.** The manufacturing method according to claim 5, wherein in step (2), the spacing film is made of polyimide, polyvinylidene fluoride or ultra-high molecular weight polyethylene, has a thickness of 0.04-0.1 mm, and has a width 2-10 cm less than that of the dipping and absorbing film roll.

**8.** The manufacturing method according to claim 5, wherein in step (4), a mass concentration of the concentrated sulfuric acid in the sulfonation tank is more than or equal to 95% and a mass ratio of the chlorosulfonic acid to the concentrated sulfuric acid is 1:(0.6-2); and the sulfonation reaction is performed at a temperature of 20-45°C for 45-90 min.

**9.** The manufacturing method according to claim 5, wherein in step (7), the tertiary amination reaction solution is a mixed solution of dichloroethane and N-methylbutylamine, and a mass concentration of the N-methylbutylamine is 5-20%; and the tertiary amination reaction is performed at 45-70°C for 3-10 h.

**10.** The manufacturing method according to claim 5, wherein in step (8), the methylation reaction solution is a mixed solution of dichloroethane and methyl iodide, and a mass concentration of the methyl iodide is 0.5-2%; and the methylation reaction is performed at a temperature of 20-35°C for 5-10 h.

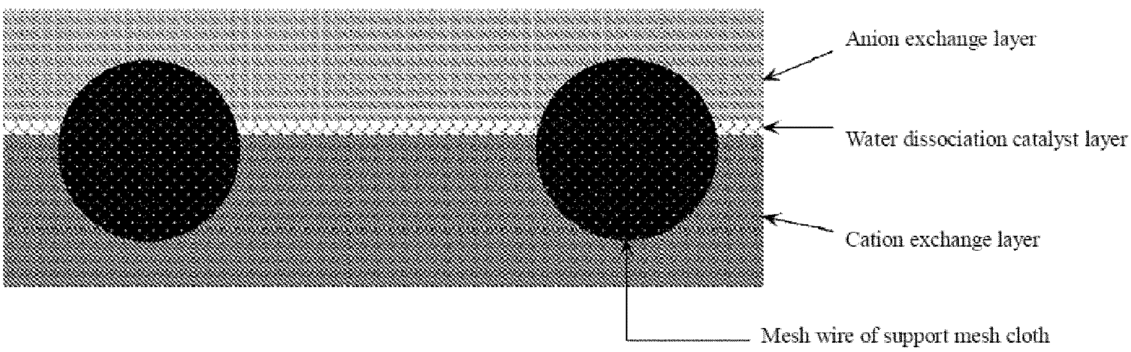
Anion exchange layer
Water dissociation catalyst layer
Cation exchange layer
Mesh wire of support mesh cloth

FIG.1

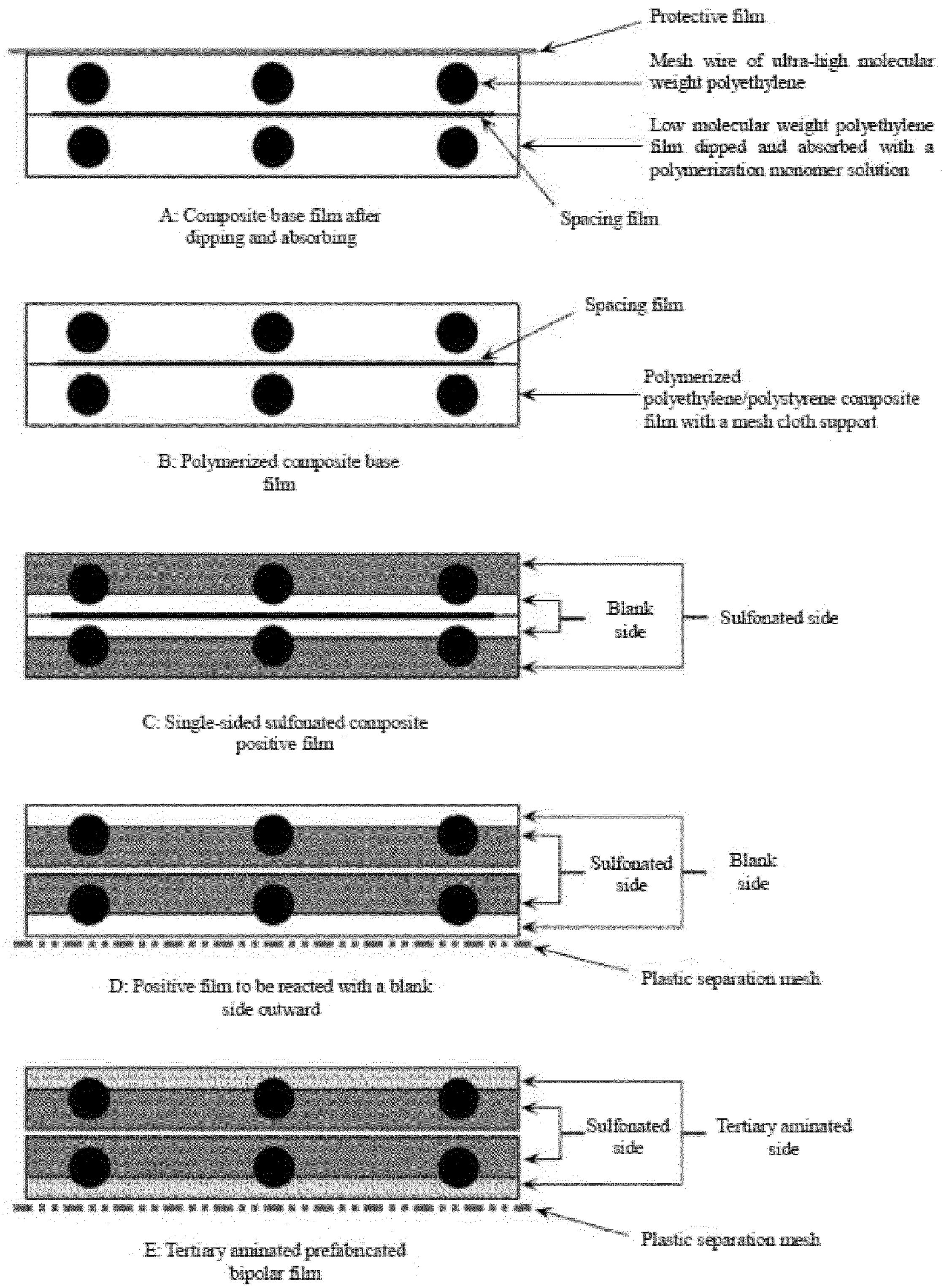
Protective film
Mesh wire of ultra-high molecular weight polyethylene
Low molecular weight polyethylene film dipped and absorbed with a polymerization monomer solution
Spacing film
A: Composite base film after dipping and absorbing
Spacing film
Polymerized polyethylene/polystyrene composite film with a mesh cloth support
B: Polymerized composite base film
Blank side
Sulfonated side
C: Single-sided sulfonated composite positive film
Sulfonated side
Blank side
Plastic separation mesh
D: Positive film to be reacted with a blank side outward
Sulfonated side
Tertiary aminated side
Plastic separation mesh
E: Tertiary aminated prefabricated bipolar film

FIG.2

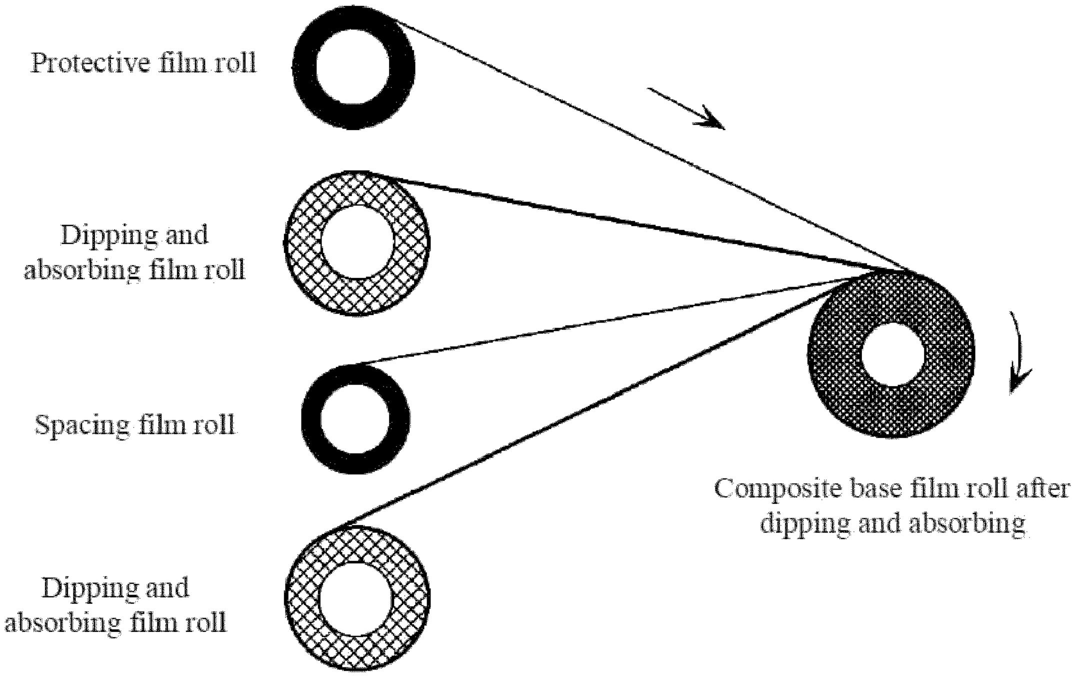
Protective film roll
Dipping and absorbing film roll
Spacing film roll
Dipping and absorbing film roll
Composite base film roll after dipping and absorbing

FIG.3

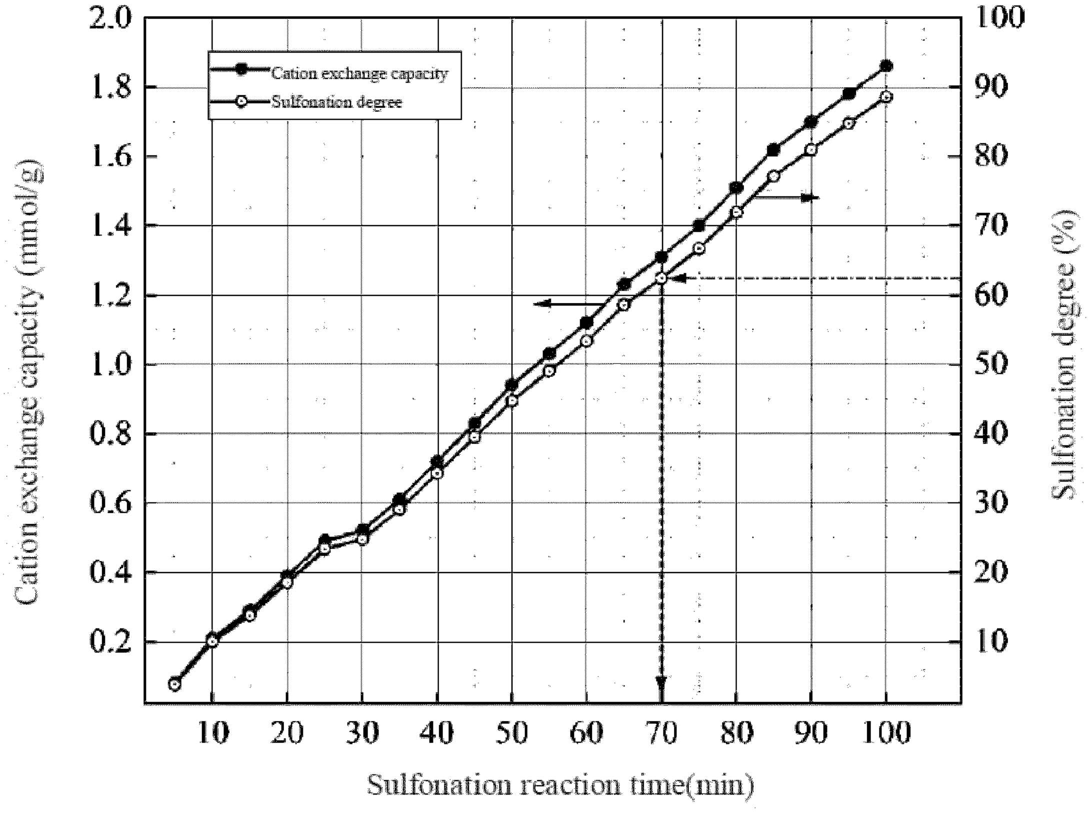
Cation exchange capacity
Sulfonation degree
Cation exchange capacity (mmol/g)
Sulfonation degree (%)
Sulfonation reaction time(min)
2.0
1.8
1.6
1.4
1.2
1.0
0.8
0.6
0.4
0.2
100
90
80
70
60
50
40
30
20
10
10 20 30 40 50 60 70 80 90 100

FIG.4

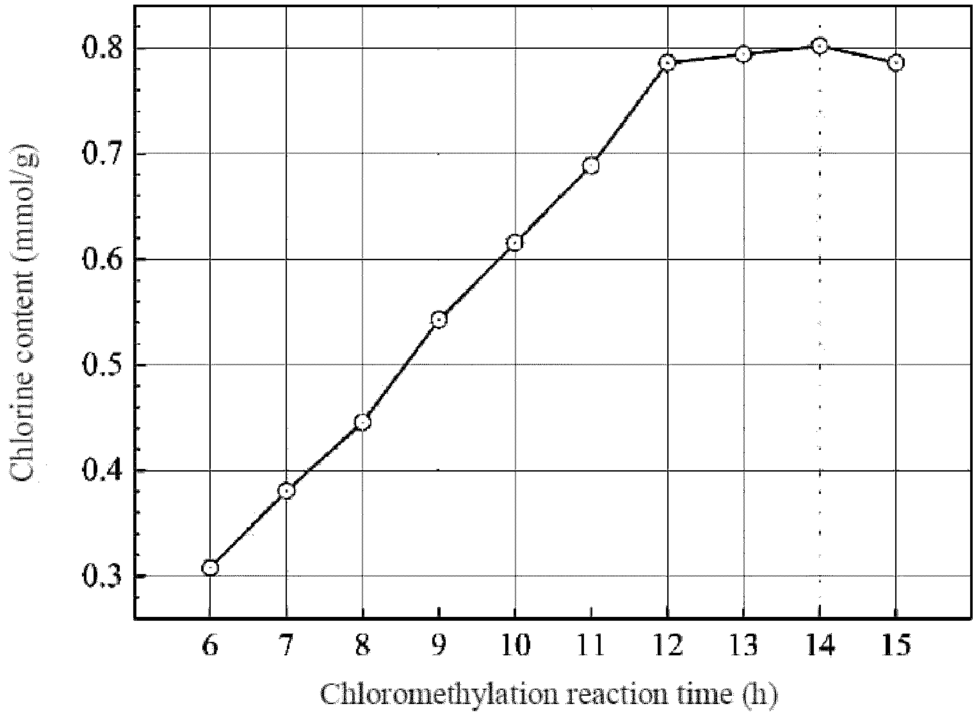
Chlorine content (mmol/g)
0.8
0.7
0.6
0.5
0.4
0.3
6
7
8
9
10
11
12
13
14
15
Chloromethylation reaction time (h)

FIG.5

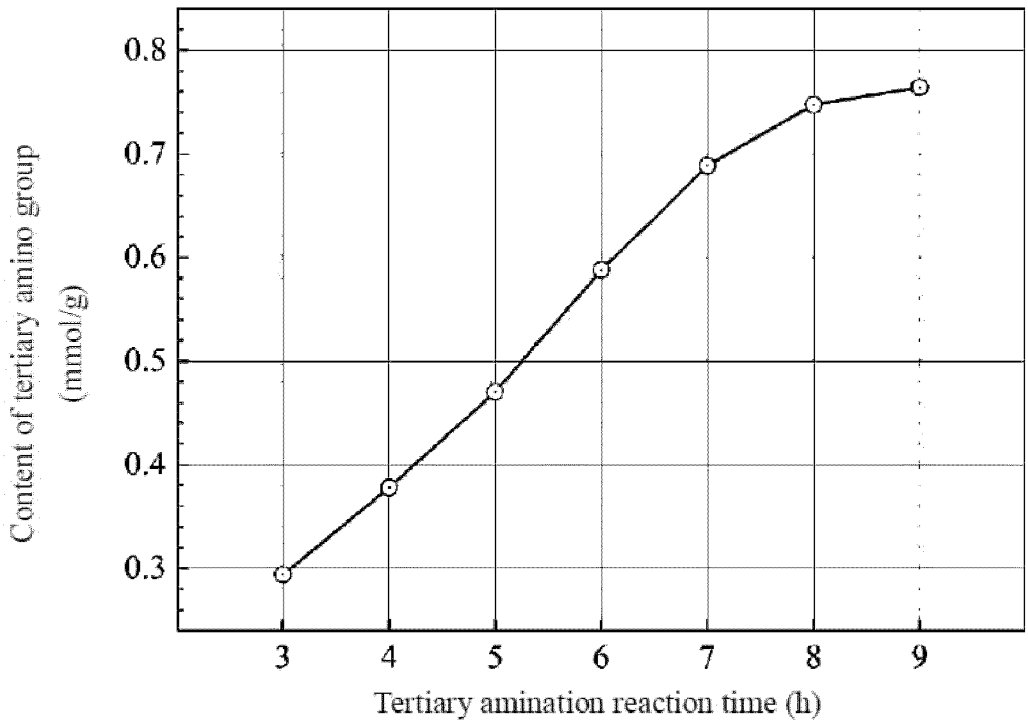
Content of tertiary amino group (mmol/g)
0.8
0.7
0.6
0.5
0.4
0.3
3
4
5
6
7
8
9
Tertiary amination reaction time (h)

FIG.6

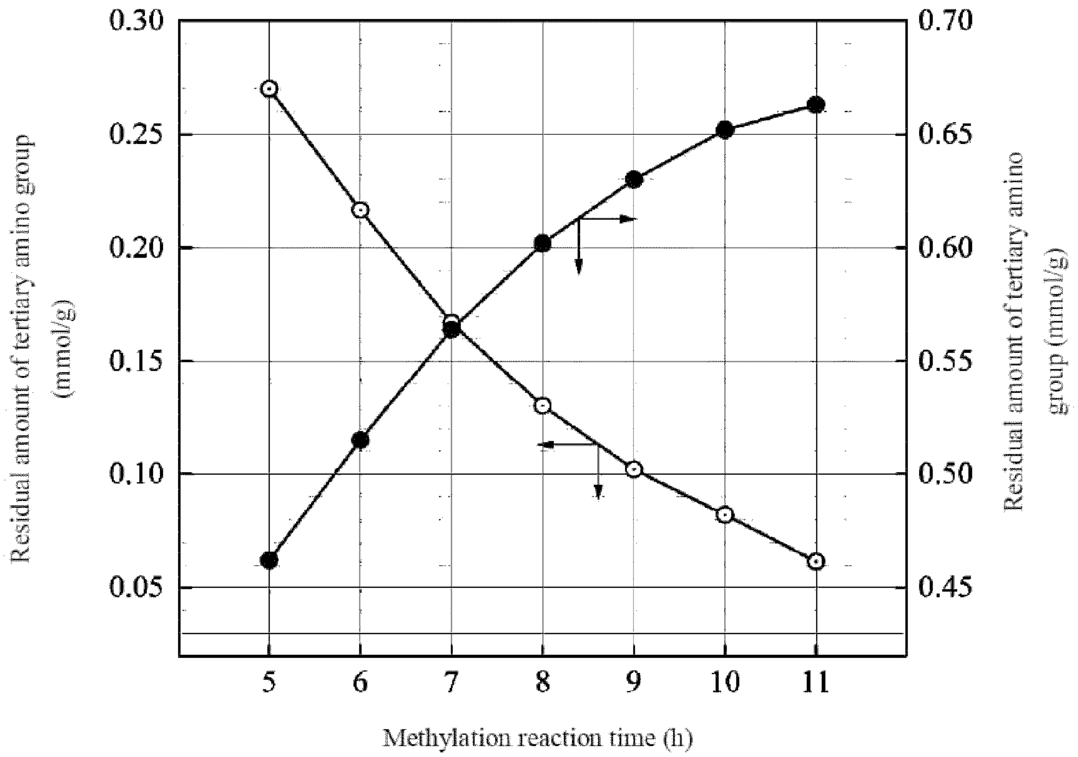
0.30
0.25
0.20
0.15
0.10
0.05
0.70
0.65
0.60
0.55
0.50
0.45
5
6
7
8
9
10
11
Residual amount of tertiary amino group (mmol/g)
Residual amount of tertiary amino group (mmol/g)
Methylation reaction time (h)

FIG.7

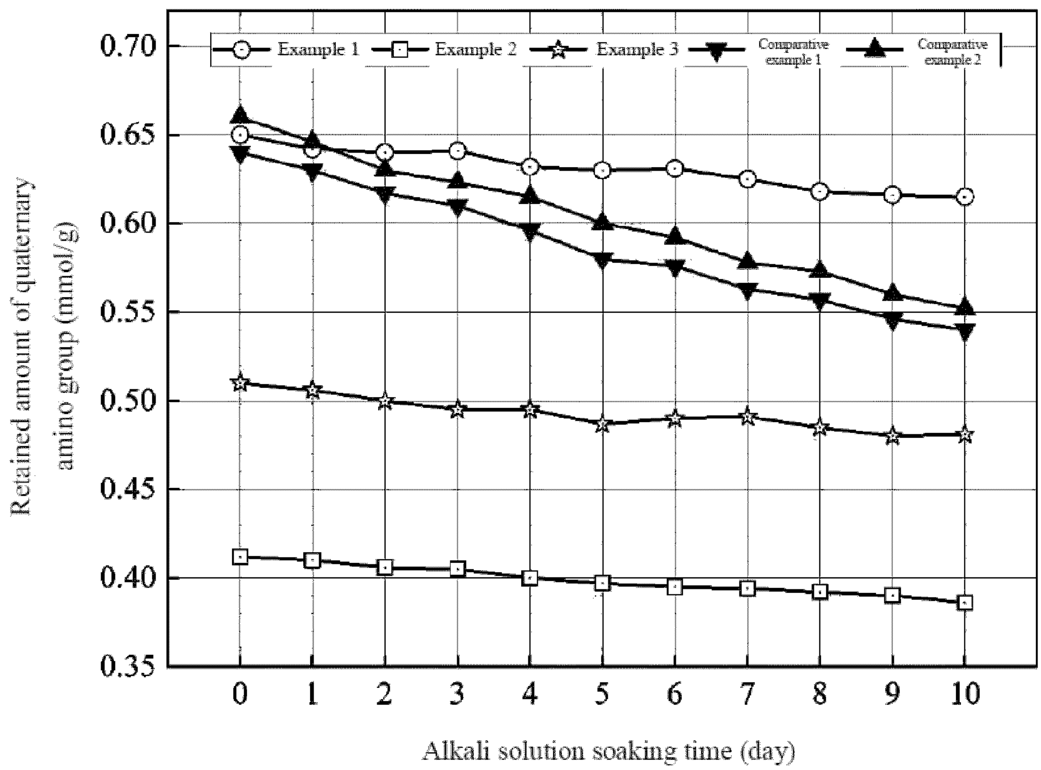
Example 1
Example 2
Example 3
Comparative example 1
Comparative example 2
0.70
0.65
0.60
0.55
0.50
0.45
0.40
0.35
0
1
2
3
4
5
6
7
8
9
10
Retained amount of quaternary amino group (mmol/g)
Alkali solution soaking time (day)

FIG.8

## INTERNATIONAL SEARCH REPORT

International application No.
**PCT/CN2021/073135**

**A. CLASSIFICATION OF SUBJECT MATTER**

B01D 61/44(2006.01)i; B01D 67/00(2006.01)i; B01D 69/12(2006.01)i; B01D 69/02(2006.01)i; B01D 71/26(2006.01)i; B01D 71/28(2006.01)i

According to International Patent Classification (IPC) or to both national classification and IPC

**B. FIELDS SEARCHED**

Minimum documentation searched (classification system followed by classification symbols)

B01D61/-,B01D67/-,B01D69/-,B01D71/-

Documentation searched other than minimum documentation to the extent that such documents are included in the fields searched

Electronic data base consulted during the international search (name of data base and, where practicable, search terms used)

CNTXT; CNABS; DWPI; SIPOABS; USTXT; WOTXT; EPTXT; ISI Web of Science; 中国期刊网全文数据库: 衢州蓝然新材料有限公司, 雷引林, 楼永通, 卿波, 陈文澜, 殷锦, 双极膜, 单片, 单层, 单膜, 聚乙烯, 聚苯乙烯, 磺化, 季铵, 季胺, 叔胺, 苄基甲基丁基胺, 辽宁易辰, 浙江大学宁波理工学院, 阳离子交换, 阴离子交换, 催化, 碘甲烷, 甲基丁胺, bipolar, membrane, quaternary ammonium, sulfonation, polyethylene, polystyrene, support+, cation, exchange, anion

**C. DOCUMENTS CONSIDERED TO BE RELEVANT**

| Category* | Citation of document, with indication, where appropriate, of the relevant passages | Relevant to claim No. |
|---|---|---|
| Y | CN 104861194 A (BEIJING TINGRUN MEMBRANE TECHNOLOGY DEVELOPMENT CO., LTD.) 26 August 2015 (2015-08-26)<br>description, paragraphs 37-42, figure 1 | 1-4 |
| Y | CN 108752681 A (QUZHOU LANRAN NEW MATERIAL CO., LTD.) 06 November 2018 (2018-11-06)<br>description, paragraphs 8-11 | 1-4 |
| Y | CN 106589432 A (LIAONING YICHEN MEMBRANE TECHNOLOGY CO., LTD.) 26 April 2017 (2017-04-26)<br>description, paragraphs 6-31, figure 1 | 1-4 |
| Y | CN 106582333 A (LIAONING YICHEN MEMBRANE TECHNOLOGY CO., LTD.) 26 April 2017 (2017-04-26)<br>description, paragraphs 4-26 | 1-4 |
| Y | US 4024043 A (ALLIED CHEM. CORP.) 17 May 1977 (1977-05-17)<br>description paragraphs 14-53 | 1-4 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 September 2021** | **20 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2021/073135**

**C. DOCUMENTS CONSIDERED TO BE RELEVANT**

| Category* | Citation of document, with indication, where appropriate, of the relevant passages | Relevant to claim No. |
|---|---|---|
| A | CN 105833737 A (XIAMEN UNIVERSITY) 10 August 2016 (2016-08-10) description, paragraphs 7-39 | 1-10 |
| A | CN 107321199 A (LIAONING YICHEN MEMBRANE TECHNOLOGY CO., LTD.) 07 November 2017 (2017-11-07) description, paragraphs 7-21 | 1-10 |

Form PCT/ISA/210 (second sheet) (January 2015)

**INTERNATIONAL SEARCH REPORT**
**Information on patent family members**

International application No.
**PCT/CN2021/073135**

| Patent document cited in search report | | | Publication date (day/month/year) | Patent family member(s) | | | Publication date (day/month/year) |
|---|---|---|---|---|---|---|---|
| CN | 104861194 | A | 26 August 2015 | CN | 104861194 | B | 28 September 2018 |
| CN | 108752681 | A | 06 November 2018 | CN | 108752681 | B | 25 September 2020 |
| CN | 106589432 | A | 26 April 2017 | CN | 106589432 | B | 27 November 2020 |
| CN | 106582333 | A | 26 April 2017 | None | | | |
| US | 4024043 | A | 17 May 1977 | US | 4140815 | A | 20 February 1979 |
| | | | | JP | S5285088 | A | 15 July 1977 |
| | | | | IL | 51129 | A | 25 July 1979 |
| | | | | DE | 2659364 | C2 | 03 April 1986 |
| | | | | FR | 2337163 | A1 | 29 July 1977 |
| | | | | DE | 2659364 | A1 | 14 July 1977 |
| | | | | GB | 1530380 | A | 25 October 1978 |
| | | | | CA | 1094982 | A | 03 February 1981 |
| | | | | JP | S6031860 | B2 | 24 July 1985 |
| | | | | FR | 2337163 | B1 | 29 July 1983 |
| | | | | IT | 1091607 | B | 06 July 1985 |
| CN | 105833737 | A | 10 August 2016 | None | | | |
| CN | 107321199 | A | 07 November 2017 | CN | 107321199 | B | 27 November 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 201610776267 A
- CN 102061004 B
- CN 108752681 B
- GB 81442008 T
- GB 119922008 T
- GB 57602000 T
- CN 2518105 Y
- CN 201780022924


### Non-patent literature cited in the description


- Technical Manual for Bipolar Films. Chemical Industry Press, July 2004, 75-89
- *Electrochimica Acta,* 1986, vol. 31 (9), 1175-1176
- *Journal of Power Sources,* 2018, vol. 375, 170-184
- Technical Manual for Bipolar Films. Chemical Industry Press, July 2004, 136